# EUROPEAN PATENT SPECIFICATION

(11) **EP 3 901 495 B1**
(45) Date of publication and mention of the grant of the patent: **11.01.2023**
(21) Application number: 20753262.3
(22) Date of filing: 06.02.2020
(51) Int. Cl.: F16H 61/16, F16H 59/18, F16H 59/44, F16H 59/50

(54) **LEAN VEHICLE**
NEIGEFAHRZEUG
VÉHICULE INCLINABLE

(30) Priority: 06.02.2019 JP 2019019425
(43) Date of publication of application: 27.10.2021
(73) Proprietor: Yamaha Hatsudoki Kabushiki Kaisha, Iwata-shi, Shizuoka 438-8501 (JP)
(72) Inventor: OHATA Shinobu, Iwata-shi, Shizuoka 438-8501 (JP)
(74) Representative: Stöckeler, Ferdinand
(86) International application number: PCT/JP2020/004669
(87) International publication number: WO 2020/162567

(56) References cited:
- JP-A- 2007 239 809
- JP-A- 2010 121 672
- JP-A- 2012 197 809
- JP-A- 2012 197 809
- JP-A- 2015 036 574
- JP-A- 2016 135 989
- JP-A- 2016 135 989

## Description

### TECHNICAL FIELD

The present invention relates to a leaning vehicle that leans leftward when turning to the left and leans rightward when turning to the right.

### BACKGROUND ART

A known gear-shift controller of a motorcycle automatically changes a plurality of gear stages. As such a gear-shift controller, Patent Document 1 (Japanese Patent Application Publication No. 2002-67741), for example, discloses a gear-shift controller of a motorcycle including a multi-stage shift mechanism that includes a plurality of transmission gears, a shift clutch that disconnects rotation transfer when the transmission gears are changed, and an ECU that drives and controls the shift mechanism and the clutch in accordance with an input command for a shift position.

The gear-shift controller disclosed in Patent Document 1 increases or reduces the engine speed in accordance with a shift direction in shift changing, and automatically obtains the input command for the shift position from detection data of an operation state of a vehicle. Specifically, in order to achieve smooth clutch engagement and disengagement in shift changing, the gear-shift controller controls the engine speed, for example, such that the engine speed is reduced during a shift-up and the engine speed is increased during a shift-down.

The gear-shift controller disclosed in Patent Document 1 can automatically disengage the clutch during deceleration without connecting a transmission gear having a maximum speed reduction ratio. Accordingly, for example, the vehicle can be stopped by disengaging the clutch in a second-speed state without performing a gear-shift from a shift position of the second speed to a shift position of a first speed (the maximum speed reduction ratio).

JP 2012 197809 A discloses a speed change controlling apparatus which performs different speed change controls based on the roll angle of a vehicle body , wherein speed change is prohibited when the roll angle is larger than a specific roll angle.

JP 2016 135989 A discloses a transmission control device of a motorcycle, in which a throttle operation unit controls opening of a throttle valve dependent on whether a clutchless shift unit determines that clutchless down shift operation can be performed or that fitting between shift gears is released by the clutchless down shift operation.

### CITATION LIST

### PATENT DOCUMENT

Patent Document 1: JP 2002 67741 A

### SUMMARY OF INVENTION

### TECHNICAL PROBLEM

The gear-shift controller disclosed in Patent Document 1 is capable of performing smooth clutch engagement by increasing or decreasing a rotation speed of the engine during gear-shift. In the gear-shift controller, a shift position is automatically computed based on detection data of an operation state, and the computation result is input to the ECU. Thus, a stable automatic gear-shift operation is performed in accordance with a traveling state and a road condition. In this manner, operability of the motorcycle can be enhanced.

When a leaning vehicle including a gear-shift controller for controlling engagement and disengagement of a clutch makes a U-turn with the clutch engaged, the clutch can be disengaged as the engine speed is reduced during the U-turn. Thereafter, when the gear stage is changed, the generated driving force changes. Accordingly, the posture of the leaning vehicle during turning might change. In a case where a driver does not predict a gear-shift, a driving force larger than expected by the driver might occur. For this reason, operability of the vehicle might decrease in turning of the leaning vehicle.

It is an object of the present invention to provide a leaning vehicle that has a small posture change when turning and that a driver can easily operate during the turning.

### SOLUTION TO PROBLEM

The inventor of the present invention performed studies on a leaning vehicle that has a small posture change and that a driver can easily operate while the leaning vehicle turns in a lean state.

According to the present invention, the problem is solved by a leaning vehicle according to claim 1.

An example of the case where the leaning vehicle turns in a lean state includes a case where the leaning vehicle makes a U-turn, for example. In a U-turn of the leaning vehicle in a second speed, for example, when the vehicle speed decreases in the second speed so that the rotation speed of the driving source becomes lower than a predetermined threshold, the gear-shift controller disengages the clutch. At this time, if the gear-shift controller shifts down to the first speed, a driving force occurring in engagement of the clutch increases, which might cause the possibility of a posture change of the leaning vehicle. In addition, a driver might recognize that the gear stage is still in the second speed, and thus, a driving force larger than expected by the driver might occur to cause a further posture change of the leaning vehicle.

On the other hand, as in the configuration described above, if the leaning vehicle is coasting in the non-transfer state of the driving force in the multi-stage automatic transmission while the leaning vehicle is turning in a lean state, the gear-shift controller inhibits shift-down of the multi-stage automatic transmission. Accordingly, the posture change occurring in the leaning vehicle by a changing of gear stages can be reduced, and a driving force as expected by the driver can be obtained. As a result, the configuration described above can provide a leaning vehicle that has a small posture change when turning and that a driver can easily operate during the turning.

In another aspect, the leaning vehicle according to the present invention preferably includes the following configurations. While the leaning vehicle is traveling in an upright state, the gear-shift controller permits shift-down of the plurality of gear stages in the multi-stage automatic transmission even if the driving force is in the non-transfer state in the multi-stage automatic transmission.

In the upright travel of the leaning vehicle, even if a driving force larger than expected by the driver occurs by shift-down of the plurality of gear stages, a posture change of the vehicle is less likely to occur.

In the upright travel of the leaning vehicle, if shift-down is inhibited, shift-down of gear stages to a first speed is delayed when the leaning vehicle is completely stopped. Thus, there arises the possibility of necessity for restarting the leaning vehicle in a large gear stage or waiting for start of the leaning vehicle until the gear stage reaches the first speed.

On the other hand, permitting shift-down of the plurality of gear stages in upright travel of the leaning vehicle as described above enables a quick increase of the vehicle speed after turning of the leaning vehicle.

In another aspect, the leaning vehicle according to the present invention preferably includes the following configurations. The leaning vehicle further includes a gear-shift operator configured to change the plurality of gear stages by an operation of a driver. The gear-shift controller changes the plurality of gear stages in the multi-stage automatic transmission in response to an operation of the gear-shift operator, and in stopping of the leaning vehicle, the gear-shift controller shifts down the plurality of gear stages in the multi-stage automatic transmission irrespective of whether or not the gear-shift operator is operated.

In a leaning vehicle including a gear-shift controller enabling a driver to change gear stages and having a semi-automatic function of automatically shifting down gear stages in accordance with the vehicle speed, if a driving force is in a non-transfer state in a multi-stage automatic transmission while the vehicle is turning in a lean state, the gear stages in the multi-stage automatic transmission are shifted down irrespective of an intention of the driver in some cases. Thus, in such a leaning vehicle, if the leaning vehicle is coasting in the non-transfer state of the driving force in the multi-stage automatic transmission while turning in a lean state, shift-down of the plurality of gear stages in the multi-stage automatic transmission is inhibited. This makes it possible to provide a leaning vehicle that has a small posture change in engaging the clutch during turning and that the driver can easily operate during the turning.

In another aspect, the leaning vehicle according to the present invention preferably includes the following configurations. The gear-shift controller permits shift-down of the plurality of gear stages in response to the operation of the gear-shift operator even if the leaning vehicle is coasting in the non-transfer state of the driving force in the multi-stage automatic transmission while the leaning vehicle is turning in the lean state.

Accordingly, even while the leaning vehicle is turning in a lean state, when a gear-shift is performed by the driver, shift-down of the plurality of gear stages in the multi-stage automatic transmission can be performed. Thus, a gear-shift operation can be performed in accordance with an intention of the driver. This makes it possible to provide a leaning vehicle that the driver easily operates.

In another aspect, the leaning vehicle according to the present invention preferably includes the following configurations. The gear-shift controller inhibits shift-down of the plurality of gear stages in the multi-stage automatic transmission if a yaw rate obtained from a detection result of the vehicle body posture detector is greater than or equal to a yaw rate threshold and the leaning vehicle is coasting in the non-transfer state of the driving force in the multi-stage automatic transmission, wherein the yaw rate is a value representing a speed of change of a yaw angle in the leaning vehicle when the leaning vehicle turns in the lean state.

The yaw rate increases as the turning radius decreases. As the turning radius decreases, the leaning vehicle is more easily to be affected by a change of a generated driving force. Thus, if the yaw rate is greater than or equal to the yaw rate threshold and the leaning vehicle is coasting in the non-transfer state of the driving force in the multi-stage automatic transmission, shift-down of the plurality of gear stages is inhibited in the multi-stage automatic transmission. Accordingly, a posture change occurring in the leaning vehicle can be reduced, and a driving force as expected by the driver can be obtained. As a result, the configuration described above can provide a leaning vehicle that has a small posture change when turning and that a driver can easily operate during the turning.

In another aspect, the leaning vehicle according to the present invention preferably includes the following configurations. The gear-shift controller inhibits shift-down of the plurality of gear stages in the multi-stage automatic transmission if the yaw rate and a lean angle obtained from a detection result of the vehicle body posture detector are greater than or equal to the yaw rate threshold and a lean angle threshold, respectively, and the leaning vehicle is coasting in the non-transfer state of the driving force in the multi-stage automatic transmission, wherein the lean angle is an angle formed by a line vertical to a road surface and an up-down direction reference line of the leaning vehicle.

As the yaw rate increases and the lean angle increases, the leaning vehicle is more easily affected by a change of a generated driving force. Thus, if the yaw rate and the lean angle are greater than or equal to the yaw rate threshold and the lean angle threshold, respectively, and the leaning vehicle is coasting in the non-transfer state of the driving force in the multi-stage automatic transmission, shift-down of a plurality of gear stages is inhibited in the multi-stage automatic transmission. Accordingly, a posture change occurring in the leaning vehicle can be reduced, and a driving force as expected by the driver can be obtained. As a result, the configuration described above can provide a leaning vehicle that has a small posture change when turning and that a driver can easily operate during the turning.

In another aspect, the leaning vehicle according to the present invention preferably includes the following configurations. The leaning vehicle further includes a vehicle speed detector configured to detect a vehicle speed of the leaning vehicle. The gear-shift controller inhibits shift-down of the plurality of gear stages in the multi-stage automatic transmission based on a lean angle obtained from a detection result of the vehicle body posture detector and the vehicle speed detected by the vehicle speed detector if the leaning vehicle is coasting in the non-transfer state of the driving force in the multi-stage automatic transmission, wherein the lean angle is an angle formed by a line vertical to a road surface and an up-down direction reference line of the leaning vehicle.

For example, at a low vehicle speed, if the lean angle is large, the leaning vehicle turning in a lean state is susceptible to influence of a change of a driving force. On the other hand, at a high vehicle speed, even if the lean angle is large, the leaning vehicle turning in a lean state is not susceptible to influence of a change of a driving force. As described above, in the leaning vehicle turning in a lean state, influence of a change of a driving force varies depending on the lean angle and the vehicle speed.

Thus, as described above, if the leaning vehicle is coasting in the non-transfer state of the driving force in the multi-stage automatic transmission, shift-down of the plurality of gear stages in the multi-stage automatic transmission based on the lean angle and the vehicle speed is inhibited. Accordingly, this makes it possible to reduce a posture change occurring in the leaning vehicle by a changing of gear stages and obtain a driving force as expected by the driver. As a result, the configuration described above can provide a leaning vehicle that has a small posture change when turning and that a driver can easily operate during the turning.

In another aspect, the leaning vehicle according to the present invention preferably includes the following configurations. The leaning vehicle further includes: a front wheel speed detector configured to detect a rotation speed of the front wheel; and a rear wheel speed detector configured to detect a rotation speed of the rear wheel. The gear-shift controller calculates the lean angle based on a difference between the rotation speed of the front wheel detected by the front wheel speed detector and the rotation speed of the rear wheel detected by the rear wheel speed detector.

Accordingly the lean angle of the leaning vehicle can be easily obtained.

The terminology used herein is for the purpose of describing particular embodiments only and is not intended to be limiting of the invention as defined in the appended claims.

As used herein, the term "and/or" includes any and all combinations of one or more of the associated listed items.

It will be further understood that the terms "including," "comprising" or "having" and variations thereof when used in this specification, specify the presence of stated features, steps, operations, elements, components, and/or their equivalents but do not preclude the presence or addition of one or more other features, steps, operations, elements, components, and/or groups thereof.

It will be further understood that the terms "mounted," "connected," "coupled," and/or their equivalents are used broadly and encompass both direct and indirect mounting, connecting and coupling. Further, "connected" and "coupled" are not restricted to physical or mechanical connections or couplings, and can include electrical connections or couplings, whether direct or indirect.

Unless otherwise defined, all terms (including technical and scientific terms) used herein have the same meaning as commonly understood by one having ordinary skill in the art to which this invention belongs.

It will be further understood that terms, such as those defined in commonly used dictionaries, should be interpreted as having a meaning that is consistent with their meaning in the context of the relevant art and the present disclosure and will not be interpreted in an idealized or overly formal sense unless expressly so defined herein.

In describing the invention, it will be understood that a number of techniques and steps are disclosed. Each of these has individual benefit and each can also be used in conjunction with one or more, or in some cases all, of the other disclosed techniques.

Accordingly, for the sake of clarity, this description will refrain from repeating every possible combination of the individual steps in an unnecessary fashion. Nevertheless, the specification and claims should be read with the understanding that such combinations are entirely within the scope of the invention as defined in the appended claims.

In this specification, embodiments of a leaning vehicle according to the present invention will be described.

In the following description, for purposes of explanation, numerous specific details are set forth in order to provide a thorough understanding of the present invention. It will be evident, however, to one skilled in the art that the present invention may be practiced without these specific details.

The following passages are to be considered as an exemplification of the invention, and is not intended to limit the invention to the specific embodiments illustrated by the figures or description below.

### [Leaning Vehicle]

A leaning vehicle herein is a vehicle that turns in a leaning posture. Specifically, the leaning vehicle is a vehicle that leans leftward when turning to the left and leans rightward when turning to the right in the left-right direction of the vehicle. The leaning vehicle may be a single-passenger vehicle or a vehicle on which a plurality of passengers can ride. The leaning vehicle includes all the types of vehicles that turn in leaning postures, such as three-wheeled vehicles and four-wheeled vehicles as well as two-wheeled vehicles.

### [Driving Source]

A driving source herein refers to a device that applies a driving force to wheels. The driving source includes, for example, a device capable of applying a driving force, such as an engine and a motor. The driving source may be a hybrid system obtained by combining an engine and a motor.

### [Automatic Transmission]

An automatic transmission herein refers to a device that performs a gear-shift, based on a signal generated by a gear-shift controller. Thus, the automatic transmission performs a gear-shift without a gear-shift operation by a driver.

### [Changing of Gear Stage]

Changing of a gear stage herein refers to change of a gear stage of an automatic transmission. The changing includes both a shift-up in which changing to a gear stage having a small gear-shift ratio is performed and a shift-down in which changing to a gear stage having a large gear-shift ratio is performed.

### [Coasting Travel]

Coasting travel herein refers to a state where a leaning vehicle in a state where a driving force is not transferred travels by inertia.

### [Upright Travel]

Upright travel herein includes not only a case where the leaning vehicle travels in a state where the up-down direction of the leaning vehicle coincides with the vertical direction, but also a case where the leaning vehicle travels while leaning to such a degree that does not cause a change of posture of the leaning vehicle by a changing gear stages in the automatic transmission.

### [Yaw Rate]

A yaw rate herein refers to a value representing a speed of change of a yaw angle in the leaning vehicle, that is, an angular velocity of the yaw angle, when the leaning vehicle turns in a lean state. The yaw angle refers to a rotation angle in rotation of the leaning vehicle about a vertical axis passing the center of gravity when the leaning vehicle is seen from above.

### [Lean Angle]

A lean angle herein refers to an angle formed by a line vertical to a road surface and an up-down direction reference line of the leaning vehicle when the leaning vehicle turns in a lean state where the leaning vehicle leans leftward or rightward about a rotation axis extending in the front-rear direction of the leaning vehicle as a center. The up-down direction reference line is a reference line extending in the up-down direction of the leaning vehicle.

### ADVANTAGEOUS EFFECTS OF INVENTION

One embodiment of the present invention provides a leaning vehicle that has a small posture change when turning and that a driver can easily operate during the turning.

### BRIEF DESCRIPTION OF DRAWINGS

[FIG. 1] FIG. 1 is a left side view of a vehicle according to a first embodiment.
[FIG. 2] FIG. 2 is a cross-sectional view illustrating a schematic configuration of a multi-stage automatic transmission.
[FIG. 3] FIG. 3 is a cross-sectional view illustrating a schematic configuration of a shift mechanism.
[FIG. 4] FIG. 4 is a view illustrating a vehicle that turns leftward when seen from the front.
[FIG. 5] FIG. 5 is a block diagram illustrating a schematic configuration of a controller.
[FIG. 6] FIG. 6 is a chart illustrating an operation flow of gear-shift control by the controller.
[FIG. 7] FIG. 7 is a block diagram according to a first variation of the first embodiment and corresponding to FIG. 5.
[FIG. 8] FIG. 8 is a flowchart according to the first variation of the first embodiment and corresponding to FIG. 6.
[FIG. 9] FIG. 9 is a view according to a second variation of the first embodiment and corresponding to FIG. 5.
[FIG. 10] FIG. 10 is a view illustrating an example of gear-shift control determination data in the second variation of the first embodiment.
[FIG. 11] FIG. 11 is a view according to the second variation of the first embodiment and corresponding to FIG. 6.
[FIG. 12] FIG. 12 is a view illustrating a multi-stage automatic transmission of a vehicle according to a second embodiment and corresponding to FIG. 2.
[FIG. 13] FIG. 13 is a diagram schematically illustrating a configuration of a multi-stage automatic transmission.
[FIG. 14] FIG. 14 is a block diagram according to another embodiment and corresponding to FIG. 5.
[FIG. 15] FIG. 15 is a diagram illustrating respective examples of a left side view of a vehicle, a cross-sectional view of a multi-stage automatic transmission, and a block diagram of a controller.

### DESCRIPTION OF EMBODIMENT

Embodiments of the present invention will be described hereinafter with reference to the drawings. The dimensions of components in the drawings do not strictly represent actual dimensions of the components and dimensional proportions of the components, for example.

In the following description, arrow F in the drawings represents a forward direction of a vehicle. Arrow RR in the drawings represents a rearward direction of the vehicle. Arrow U in the drawings represents an upward direction of the vehicle. Arrow R in the drawings represents a rightward direction of the vehicle. Arrow L in the drawings represents a leftward direction of the vehicle. The front, rear, left, and right directions respectively refer to the front, rear, left, and right directions when seen from a driver driving the vehicle.

### [First Embodiment]

### <Overall Configuration>

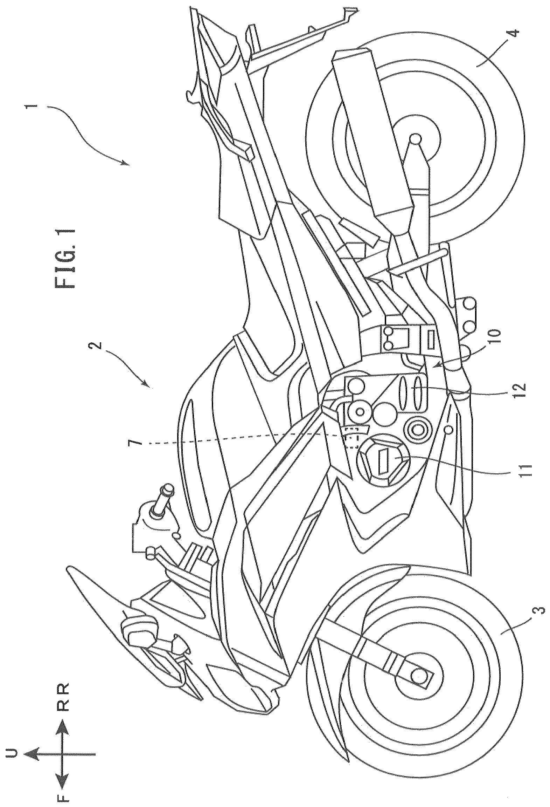

FIG. 1 illustrates a left side view of a vehicle 1 according to an embodiment of the present invention. The vehicle 1 is, for example, a motorcycle. Specifically, the vehicle 1 is a leaning vehicle that leans leftward when turning to the left and leans rightward when turning to the right.

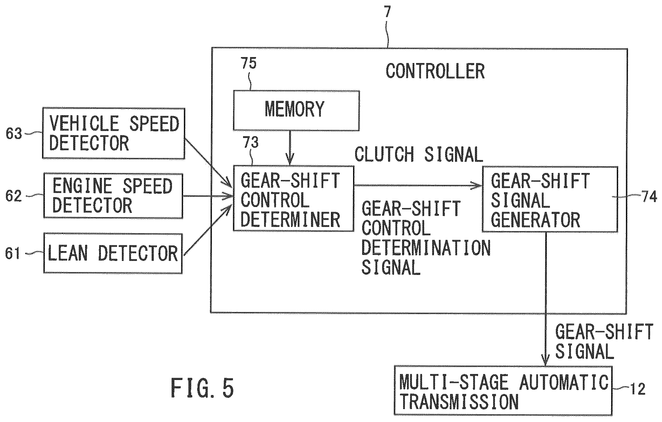

The vehicle 1 includes a vehicle body 2, a front wheel 3, a rear wheel 4, a controller 7, a lean detector 61, an engine speed detector 62, and an engine unit 10. The lean detector 61 and the engine speed detector 62 are illustrated in FIG. 5.

The engine unit 10 for supplying a rotation driving force to the rear wheel 4 is attached to the frame of the vehicle body 2. The engine unit 10 includes an engine 11 as an example of a driving source, and a multi-stage automatic transmission 12 that shifts the speed of rotation output from the engine 11. The configuration of the engine unit 10 will be specifically described later.

The controller 7 for controlling driving of the engine unit 10 is disposed in the vehicle body 2. The controller 7 is a so-called electric control unit (ECU), and controls driving of other components in the vehicle 1 as well as the engine unit 10.

The lean detector 61, the engine speed detector 62, and a vehicle speed detector 63 are also disposed in the vehicle body 2. The lean detector 61 detects information on a leaning posture of the vehicle 1. That is, the lean detector 61 functions as a vehicle body posture detector.

In this embodiment, the lean detector 61 is, for example, an inertial measurement unit (IMU), and detects a yaw rate that is an angular velocity when the vehicle 1 rotates about a vertical axis when the vehicle 1 is seen from above. The lean detector 61 may be configured to detect at least one of an angular velocity (pitch angular velocity) when the vehicle 1 rotates forward or rearward about a rotation axis extending in the left-right direction of the vehicle 1 or an angular velocity (lean angular velocity) when the vehicle 1 leans with respect to the vertical axis.

The engine speed detector 62 detects engine speed of the engine 11 of the engine unit 10.

The vehicle speed detector 63 detects a vehicle speed of the vehicle 1. The vehicle speed detector 63 detects a rotation speed of the front wheel 3 to thereby detect the vehicle speed of the vehicle 1, for example. The vehicle speed detector 63 may detect a rotation speed of the rear wheel 4 to thereby detect the vehicle speed of the vehicle 1. The vehicle speed detector 63 may include another configuration capable of detecting the vehicle speed of the vehicle 1.

Note that a throttle opening degree detector that detects an opening degree of a throttle valve may also be provided in the vehicle body 2.

### <Engine Unit>

Next, a configuration of the engine unit 10 will be described.

The engine unit 10 includes the engine 11 and the multi-stage automatic transmission 12. The engine 11 has a configuration similar to that of a typical engine. Thus, the engine 11 will not be described in detail.

The multi-stage automatic transmission 12 includes a plurality of gear stages and automatically changes the gear stages stepwise to thereby change a driving force to be transferred from the engine 11 to the rear wheel 4. Specifically, the multi-stage automatic transmission 12 includes a transmission mechanism 20, a clutch 40, and a shift mechanism 50.

The term of automatically changing the gear stages stepwise refers to changing to a next gear stage having a large gear-shift ratio or a next gear stage having a small gear-shift ratio without a gear-shift operation by a driver of the vehicle 1. At this time, an instruction signal instructing changing of the gear stages may be input, or may not be input, from the driver of the vehicle 1 to the multi-stage automatic transmission 12.

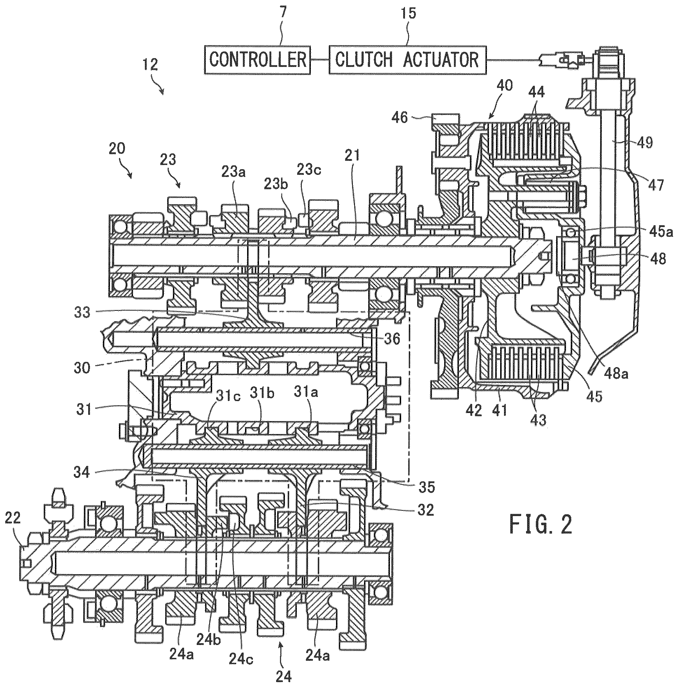

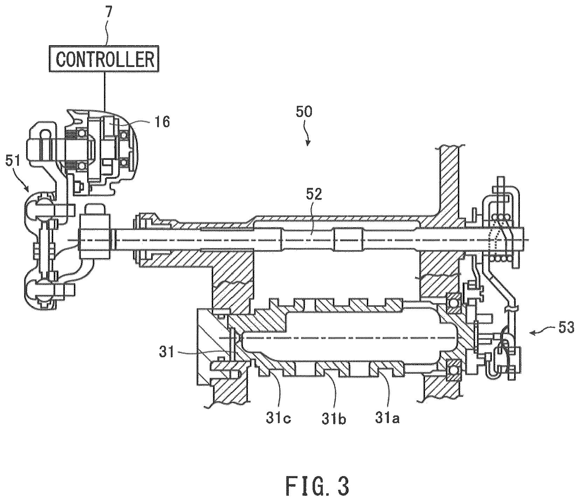

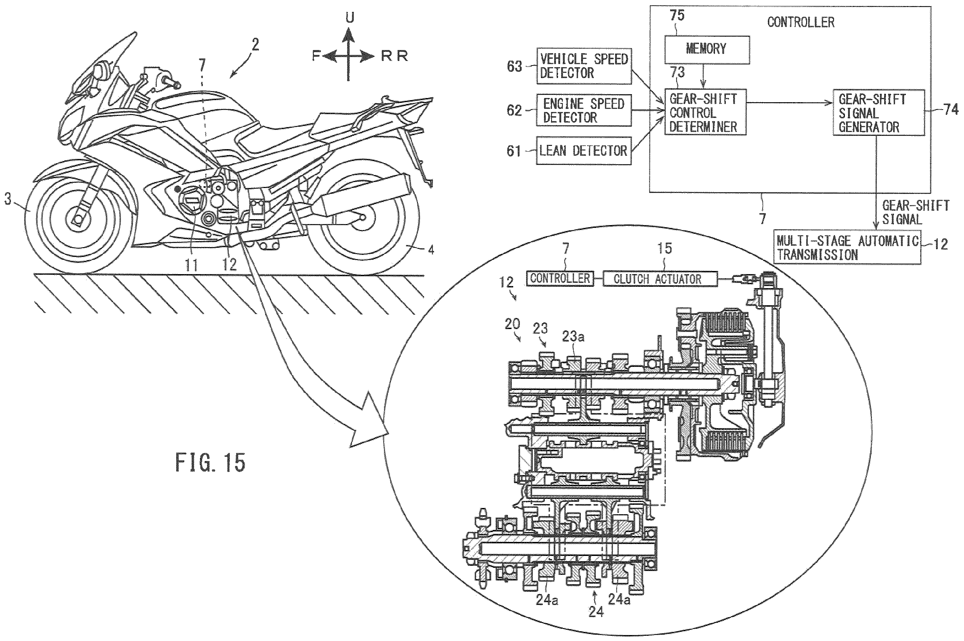

FIG. 2 illustrates schematic configurations of the transmission mechanism 20 and the clutch 40 of the multi-stage automatic transmission 12. FIG. 3 illustrates a schematic configuration of the shift mechanism 50 of the multi-stage automatic transmission 12. FIG. 15 illustrates schematic configurations of the vehicle 1 and the multi-stage automatic transmission 12. FIG. 15 also illustrates a block diagram of the controller 7 described later. Since FIG. 15 corresponds to FIGS. 1, 2, and 5, detailed description of FIG. 15 will be omitted.

The transmission mechanism 20 is connected to a crankshaft, not shown, of the engine 11. The transmission mechanism 20 changes a torque transferred from the crankshaft to a predetermined torque, and outputs the predetermined torque.

The clutch 40 is configured to transmit rotation of the crankshaft to the transmission mechanism 20. That is, the clutch 40 is configured to switch between transfer and non-transfer of rotation of the crankshaft to the transmission mechanism 20.

The shift mechanism 50 performs a gear-shift of the transmission mechanism 20 through a sequential shift mechanism 30 described later, and retains a gear stage selected by the transmission mechanism 20 until the next gear shift is performed by the transmission mechanism 20.

As described above, a driving force is transferred to the transmission mechanism 20 of the multi-stage automatic transmission 12 from the engine 11 through the clutch 40.

With reference to FIG. 2 and FIG. 3, the configuration of the multi-stage automatic transmission 12 including the transmission mechanism 20, the clutch 40, and the shift mechanism 50 will be described in detail.

The clutch 40 is, for example, a multiplate friction clutch. The clutch 40 includes a bottomed cylindrical clutch housing 41, a bottomed cylindrical clutch boss 42, a plurality of friction plates 43 and a plurality of clutch plates 44 that are friction discs, a pressure plate 45, and an input gear 46. The clutch 40 is not limited to a multiplate friction clutch as described in this embodiment. The clutch 40 may be an automatic centrifugal clutch, for example, using a centrifugal weight.

The clutch housing 41 is disposed concentrically with a main shaft 21 of the transmission mechanism 20 and is rotatable relative to the main shaft 21. A bottom portion of the bottomed cylindrical clutch housing 41 is connected to the input gear 46. The input gear 46 meshes with a gear (not shown) disposed on the crankshaft of the engine 11 to thereby rotate together with the gear. The clutch housing 41 and the input gear 46 rotate together with the crankshaft, and are rotatable with respect to the main shaft 21 of the transmission mechanism 20.

The plurality of friction plates 43 as ring-shaped thin plates are arranged inside the clutch housing 41. The plurality of friction plates 43 are arranged in the thickness direction inside the clutch housing 41. The plurality of friction plates 43 are attached to the inner peripheral surface of the clutch housing 41 to be rotatable together with the clutch housing 41 and displaceable with respect to the clutch housing 41 along the axial direction of the main shaft 21.

An end portion of the main shaft 21 penetrates the bottom portion of the clutch housing 41. A bottom portion of the clutch boss 42 is fixed to a front end portion of the main shaft 21 penetrating the clutch housing 41. Accordingly, the clutch boss 42 rotates together with the main shaft 21.

The clutch boss 42 is disposed inside the clutch housing 41. The plurality of clutch plates 44 as ring-shaped thin plates are disposed on an outer peripheral portion of the clutch boss 42. That is, the plurality of clutch plates 44 are attached to the outer peripheral surface of the clutch boss 42 to be rotatable together with the clutch boss 42 and displaceable with respect to the clutch boss 42 along the axial direction of the main shaft 21.

The plurality of friction plates 43 and the plurality of clutch plates 44 are alternately arranged along the axial direction of the main shaft 21.

The pressure plate 45 is a substantially disc-shaped member. The clutch housing 41, the clutch boss 42, and the pressure plate 45 are arranged in this order with respect to the main shaft 21 along the axial direction of the main shaft 21. The pressure plate 45 is disposed outside the main shaft 21 in the axial direction to face the clutch boss 42 in the axial direction. The pressure plate 45 is displaceable with respect to the clutch boss 42 along the axial direction of the main shaft 21 and is also pressed by a clutch spring 47 toward the clutch boss 42.

As described above, when the pressure plate 45 is pressed toward the clutch boss 42, each of the friction plates 43 and each of the clutch plates 44 are thereby pushed against each other in the thickness direction. That is, the plurality of friction plates 43 and the plurality of clutch plates 44 are engaged with one another. As described above, while the plurality of friction plates 43 and the plurality of clutch plates 44 are engaged, the clutch boss 42 and the clutch housing 41 rotate together by friction between the friction plates 43 and the clutch plates 44. This state is an engaged state of the clutch 40, that is, a transfer state in which a driving force is transferred.

In this engaged state of the clutch 40, rotation is allowed to be transferred from the clutch housing 41 to the clutch boss 42, that is, from the input gear 46 to the main shaft 21, through each of the friction plates 43 and each of the clutch plates 44.

A push rod 48 penetrates a center portion of the pressure plate 45 when seen in the axial direction of the main shaft 21. The push rod 48 is disposed to extend in the axial direction of the main shaft 21. That is, the axial direction of the push rod 48 coincides with the axial direction of the main shaft 21. A flange 48a is provided on one end of the push rod 48. The other end of the push rod 48 is connected to a rod 49. The rod 49 is rotatable about the axis by a clutch actuator 15. The clutch actuator 15 is driven and controlled based on a clutch signal output from the controller 7.

The push rod 48 is configured to be movable along the axial direction of the main shaft 21 by rotation of the rod 49. In a case where the push rod 48 moves in a direction away from the main shaft 21 (rightward in FIG. 2), the pressure plate 45 receives a force in a direction away from the clutch boss 42 in the axial direction by the flange 48a of the push rod 48. Accordingly, the clutch spring 47 is deformed to be compressed, and thus, a force with which the pressure plate 45 pushes the friction plates 43 and the clutch plates 44 decreases.

Consequently, a contact pressure between the friction plates 43 and the clutch plates 44 decreases. In this manner, the friction plates 43 and the clutch plates 44 are disengaged, and the clutch boss 42 and the clutch housing 41 rotate relative to each other. This state is a disengaged state of the clutch 40, that is, a non-transfer state in which a driving force is not transferred.

That is, the clutch 40 is switched between the engaged state and the disengaged state by movement of the push rod 48 along the axial direction of the main shaft 21.

The pressure plate 45 is rotatable relative to the push rod 48 with a bearing 45a interposed therebetween. Accordingly, while the clutch 40 is in the engaged state, the pressure plate 45 rotates together with the clutch housing 41 and the clutch boss 42.

The transmission mechanism 20 is a multistep transmission mechanism. The transmission mechanism 20 includes the main shaft 21, an output shaft 22 disposed in parallel with the main shaft 21, a plurality of driving gears 23, a plurality of driven gears 24, and the sequential shift mechanism 30. The sequential shift mechanism 30 includes a shift cam 31, shift forks 32 through 34, and guide shafts 35 and 36 for guiding movement of the shift forks 32 through 34.

The main shaft 21 is provided with the plurality of driving gears 23. The plurality of driving gears 23 are transmission gears constituting part of the plurality of gear stages. The output shaft 22 is provided with the plurality of driven gears 24 always meshing with the plurality of driving gears 23. The plurality of driven gears 24 are transmission gears constituting part of the plurality of gear stages. The transmission mechanism 20 is a so-called gear-type transmission mechanism in which the plurality of driving gears 23 and the plurality of driven gears 24 always mesh with each other in a one-to-one relationship.

In the transmission mechanism 20, in accordance with the gear stage, the sequential shift mechanism 30 selects a combination of a driving gear 23 and a driven gear 24 for transferring a driving force among the plurality of driving gears 23 and the plurality of driven gears 24.

Specifically, a predetermined driving gear 23a in the plurality of driving gears 23 is fixed to the main shaft 21 in the rotation direction, while being movable along the axial direction of the main shaft 21. Predetermined driven gears 24a in the plurality of driven gears 24 are fixed to the output shaft 22 in the rotation direction, while being movable along the axial direction of the output shaft 22. Positions of the predetermined driving gear 23a and the predetermined driven gears 24a in the axial direction are determined by the sequential shift mechanism 30 in accordance with the gear stage.

The driving gears 23, except for the predetermined driving gear 23a in the plurality of driving gears 23, include driving gears 23 fixed to the main shaft 21 in the axial direction and rotatable with respect to the main shaft 21, and driving gears 23 fixed to the main shaft 21 in the axial direction and rotatable together with the main shaft 21. Driven gears 24, except for the predetermined driven gears 24a in the plurality of driven gears 24, are fixed to the output shaft 22 in the axial direction and rotatable with respect to the output shaft 22.

A configuration of the transmission mechanism 20 is similar to a configuration of a known transmission mechanism (e.g., Japanese Patent Application Publication No. 2015-117798), and thus, will not be described in detail.

The sequential shift mechanism 30 includes the shift cam 31 and the shift forks 32 through 34. As illustrated in FIG. 3, cam grooves 31a through 31c are formed on the outer peripheral surface of the shift cam 31 of the sequential shift mechanism 30. The cam grooves 31a through 31c are arranged along the axial direction of the shift cam 31 such that each of the cam grooves 31a through 31c extends circumferentially on the outer peripheral surface of the shift cam 31. The cam grooves 31a through 31c are arranged on the outer peripheral surface of the shift cam 31 such that positions of the cam grooves 31a through 31c in the axial direction of the shift cam 31 change in accordance with the positions thereof in the circumferential direction of the shift cam 31. One end of each of the shift forks 32 through 34 is located in an associated one of the cam grooves 31a through 31c. Configurations of the cam grooves 31a through 31c of this embodiment are similar to those of known cam grooves (e.g., Japanese Patent Application Publication No. 2015-117798), and thus, will not be described in detail.

As illustrated in FIG. 2, the shift forks 32 through 34 are disposed on the guide shafts 35 and 36 parallel to the axis of the shift cam 31 and are movable along the axial direction of the guide shafts 35 and 36. The other end of each of the shift forks 32 through 34 is connected to the predetermined driving gear 23a and the predetermined driven gears 24a. Accordingly, when the shift cam 31 rotates, the shift forks 32 through 34 move in the axial direction of the shift cam 31 along the cam grooves 31a through 31c on the outer peripheral surface of the shift cam 31. Thus, with the rotation of the shift cam 31, positions of the predetermined driving gear 23a and the predetermined driven gears 24a in the axial direction are determined through the shift forks 32 through 34.

The predetermined driving gear 23a and the driving gear 23 adjacent to the predetermined driving gear 23a in the axial direction of the main shaft 21 respectively include dogs 23b and 23c that mesh with each other. Each of the predetermined driven gears 24a and the driven gear 24 adjacent to the predetermined driven gear 24a in the axial direction of the output shaft 22 respectively include dogs 24b and 24c that mesh with each other. As described above, with the rotation of the shift cam 31, when the predetermined driving gear 23a moves along the axial direction through the shift fork 33, the dog 23b of the predetermined driving gear 23a meshes with the dog 23c of the driving gear 23 adjacent to the predetermined driving gear 23a in the axial direction of the main shaft 21. With the rotation of the shift cam 31, when each of the predetermined driven gears 24a moves along the axial direction through its corresponding one of the shift forks 32 or 34, the dog 24b of the predetermined driven gear 24a meshes with the dog 24c of the driven gear 24 adjacent to the predetermined driven gear 24a in the axial direction of the output shaft 22.

Accordingly, a combination of the driving gear 23 and the driven gear 24 for transferring a driving force from the main shaft 21 to the output shaft 22 is selected. That is, in the transmission mechanism 20, in a case where the predetermined driving gear 23a moves along the axial direction through the shift fork 33 in accordance with the rotation of the shift cam 31, the driving gear 23 associated with a specific gear stage (i.e., gear stage except for the predetermined gear stage) in the plurality of driving gears 23 is fixed to the main shaft 21 by the predetermined driving gear 23a to rotate together with the main shaft 21. On the other hand, in a case where the predetermined driven gear 24a moves along the axial direction through the shift forks 32 and 34 in accordance with the rotation of the shift cam 31, the driven gear 24 associated with a specific gear stage (i.e., gear stage except for the predetermined gear stage) in the plurality of driven gears 24 is fixed to the output shaft 22 by the predetermined driven gear 24a to rotate together with the output shaft 22.

In the manner described above, only the driving gear 23 and the driven gear 24 associated with the specific gear stage in the transmission mechanism 20 transfer a driving force from the main shaft 21 to the output shaft 22. Accordingly, the transmission mechanism 20 transfers a driving force output from the engine 11 from the main shaft 21 to the output shaft 22 at a predetermined gear-shift ratio in each gear stage.

The shift mechanism 50 causes the shift cam 31 of the transmission mechanism 20 to rotate in accordance with a gear-shift signal output from the controller 7. The shift mechanism 50 is driven by a shift actuator 16. The shift actuator 16 is driven and controlled based on a gear-shift signal output from the controller 7.

The shift mechanism 50 includes a shift rod 51, a shift shaft 52, and an intermittent feeder 53. A driving force of the shift actuator 16 is transferred to the shift rod 51. One end of the shift shaft 52 is connected to the shift rod 51. The other end of the shift shaft 52 is connected to the shift cam 31 through the intermittent feeder 53. The shift actuator 16 causes the shift shaft 52 to rotate in a predetermined direction through the shift rod 51 based on a gear-shift signal output from the controller 7. This predetermined direction is switched in opposite directions between a shift-up (changing to a gear stage having a smaller gear-shift ratio) and a shift-down (changing to a gear stage having a larger gear-shift ratio).

The shift shaft 52 rotates with a driving force of the shift actuator 16 to thereby cause the shift cam 31 to rotate about the axis through the intermittent feeder 53. When the shift shaft 52 rotates in a predetermined direction, the intermittent feeder 53 causes the shift cam 31 to rotate by a certain angle in a rotation direction corresponding to the predetermined direction. A configuration of the intermittent feeder 53 is similar to a known configuration (e.g., Japanese Patent Application Publication No. 2015-117798). Thus, the configuration of the intermittent feeder 53 will not be described in detail.

With the configuration described above, when the shift actuator 16 is driven based on a gear-shift signal output from the controller 7, a driving force of the shift actuator 16 causes the shift shaft 52 to rotate in a predetermined direction through the shift rod 51. In accordance with the rotation direction of the shift shaft 52, the intermittent feeder 53 causes the shift cam 31 to rotate by a certain angle in a rotation direction corresponding to the predetermined direction.

Accordingly, in the transmission mechanism 20, the shift forks 32 through 34 move in the axial direction of the shift cam 31 along the cam grooves 31a through 31c on the shift cam 31. With such movement of the shift forks 32 through 34, the predetermined driving gear 23a and the driving gear 23 associated with the gear stage are engaged through the dogs 23b and 23c thereof, whereas one of the predetermined driven gears 24a and the driven gear 24 associated with the gear stage are engaged through the dogs 24b and 24c thereof. Consequently, the transmission mechanism 20 can transfer a driving force at a gear-shift ratio of each gear stage from the main shaft 21 to the output shaft 22 through the driving gear 23 and the driven gear 24 associated with the gear stage.

### <Controller>

The controller 7 controls driving of components of the vehicle 1, such as the engine unit 10. The controller 7 is, for example, an electric control unit (ECU). In this embodiment, the controller 7 generates a gear-shift signal for instructing changing of gear stages and outputs the gear-shift signal to the multi-stage automatic transmission 12. The controller 7 of this embodiment controls driving of the multi-stage automatic transmission 12, based on an engine speed and the yaw rate of the vehicle 1. That is, the controller 7 constitutes a gear-shift controller.

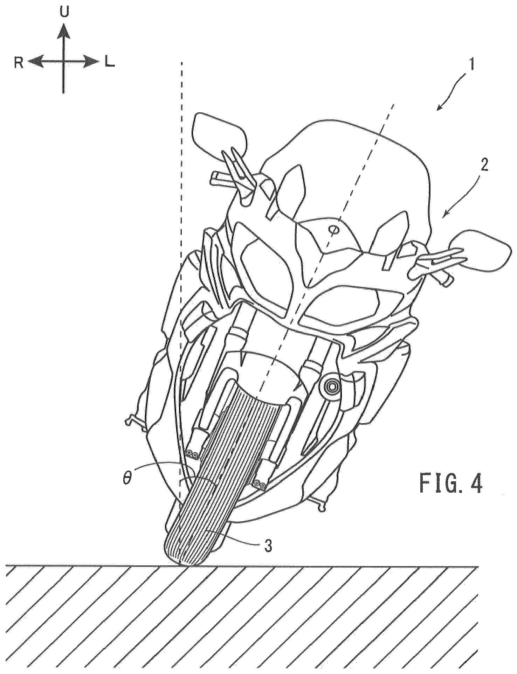

In this embodiment, the vehicle 1 leans leftward when turning to the left and leans rightward when turning to the right. FIG. 4 is a view of the vehicle 1 that turns leftward, when seen from the front. As illustrated in FIG. 4, while the vehicle 1 turns, the vehicle 1 leans at a predetermined lean angle θ with respect to a vertical axis (broken line in FIG. 4).

As described above, while the vehicle 1 turns leftward while leaning to the left or turns rightward while leaning to the right and the vehicle 1 is coasting in a non-transfer state of a driving force in the multi-stage automatic transmission 12 of the vehicle 1, when a plurality of gear stages in the multi-stage automatic transmission 12 are shifted down, a driving force larger than expected by the driver is transferred from the engine unit 10 to the rear wheel 4. Then, a posture change of the vehicle 1 unexpected by the driver might occur.

In contrast, in a case where the vehicle 1 is turning in a lean state and the vehicle 1 is coasting in a non-transfer state of a driving force in the multi-stage automatic transmission 12 of the vehicle 1, the controller 7 of this embodiment inhibits a shift-down of the plurality of gear stages in the multi-stage automatic transmission 12.

Note that the phrase "the driving force is in a non-transfer state in the multi-stage automatic transmission 12" refers to a case where the clutch 40 is in a disengaged state or a case where the driving force is not transferred in the plurality of gear stages of the transmission mechanism 20 (neutral). In this embodiment, as an example in which the driving force is in the non-transfer state in the multi-stage automatic transmission 12, a case where the clutch 40 is in the disengaged state will be described.

FIG. 5 is a block diagram illustrating a schematic configuration of the controller 7. The controller 7 includes a gear-shift control determiner 73, a gear-shift signal generator 74, and a memory 75.

The gear-shift control determiner 73 generates a clutch signal and a gear-shift control determination signal based on the engine speed detected by the engine speed detector 62, the yaw rate detected by the lean detector 61, and the vehicle speed detected by the vehicle speed detector 63.

Specifically, if the engine speed is smaller than an engine speed threshold (threshold), the gear-shift control determiner 73 generates a clutch signal for disengaging the clutch 40 of the multi-stage automatic transmission 12. If the engine speed is greater than or equal to the engine speed threshold (threshold), the gear-shift control determiner 73 generates a clutch signal for engaging the clutch 40 of the multi-stage automatic transmission 12.

If the yaw rate detected by the lean detector 61 is larger than the yaw rate threshold, the gear-shift control determiner 73 determines that the vehicle 1 is turning in a lean state. If the clutch 40 is in a disengaged state and the vehicle speed of the vehicle 1 is larger than zero, the gear-shift control determiner 73 determines that the vehicle 1 is coasting. If the vehicle 1 is coasting while the vehicle 1 is turning in a lean state, the gear-shift control determiner 73 generates a gear-shift control determination signal for inhibiting a shift-down of the plurality of gear stages in the multi-stage automatic transmission 12.

If the vehicle 1 is not turning in a lean state or the clutch 40 is in an engaged state, the gear-shift control determiner 73 generates a gear-shift control determination signal for permitting a shift-down of a plurality of gear stages in the multi-stage automatic transmission 12. Even if the vehicle 1 is in a lean state and the clutch 40 is in a disengaged state, when the vehicle speed of the vehicle 1 is zero, the gear-shift control determiner 73 does not generate a gear-shift control determination signal for inhibiting a shift-down of the plurality of gear stages in the multi-stage automatic transmission 12.

The case where the vehicle 1 is not turning in a lean state includes, for example, a case where the vehicle 1 is traveling in an upright state. During the upright travel of the vehicle 1, even if a driving force larger than expected by the driver due to a shift-down of the plurality of gear stages in the multi-stage automatic transmission 12, there is a low possibility of a posture change of the vehicle 1. During the upright travel of the vehicle 1, if a shift-down is inhibited, a shift-down of the gear stages to the first speed is delayed when the vehicle 1 is completely stopped. Thus, there arises the possibility of necessity for restarting the vehicle 1 in a large gear stage or waiting for start of the vehicle 1 until the gear stage reaches the first speed.

In contrast, permission of a shift-down of the plurality of gear stages in the multi-stage automatic transmission 12 during upright travel of the vehicle 1 as described above enables a quick increase of the vehicle speed after turning of the vehicle 1.

The engine speed threshold and the yaw rate threshold are stored in the memory 75.

The gear-shift signal generator 74 generates a gear-shift signal for instructing disengagement or engagement of the clutch 40 to the multi-stage automatic transmission 12 in accordance with the clutch signal output from the gear-shift control determiner 73.

The gear-shift signal generator 74 also generates a gear-shift signal for instructing changing of the gear stages in accordance with the vehicle speed, the engine speed, and the throttle opening degree of the vehicle 1 if a gear-shift control determination signal output from the gear-shift control determiner 73 is a signal for permitting changing of the plurality of gear stages in the multi-stage automatic transmission 12.

The generation of the gear-shift signal by the gear-shift signal generator 74 is similar to generation of a gear-shift signal in typical gear-shift control, and thus, will not be described in detail. The gear-shift signal generated by the gear-shift signal generator 74 is output to the multi-stage automatic transmission 12. In the multi-stage automatic transmission 12, driving of the clutch actuator 15 and the shift actuator 16 is controlled based on the gear-shift signal.

If the gear-shift control determination signal output from the gear-shift control determiner 73 is a signal for inhibiting a shift-down of the gear stages in the multi-stage automatic transmission 12, the gear-shift signal generator 74 does not generate a gear-shift signal.

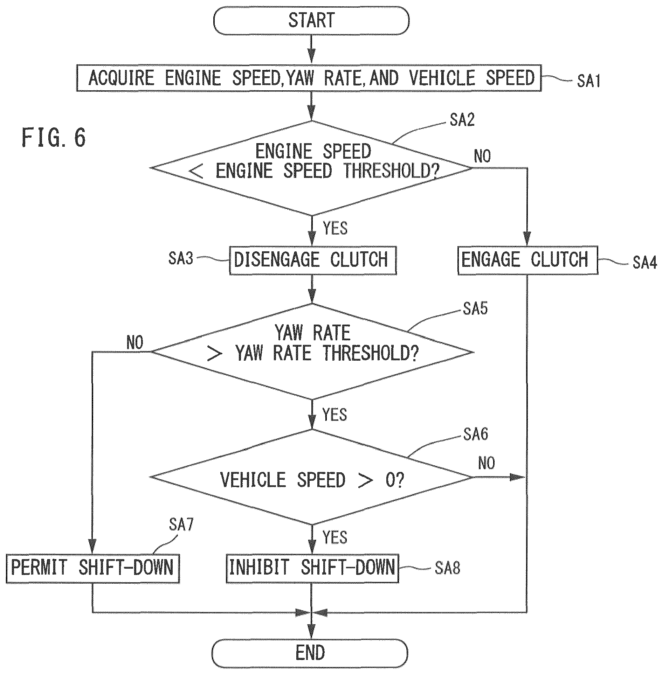

Next, gear-shift control by the controller 7 having the configuration as described above will be described. FIG. 6 illustrates an operation flow of gear-shift control by the controller 7.

When the flow shown in FIG. 6 starts, the controller 7 first acquires respective data on the rotation speed of the engine 11 of the vehicle 1 detected by the engine speed detector 62, the yaw rate of the vehicle 1 detected by the lean detector 61, and the vehicle speed of the vehicle 1 detected by the vehicle speed detector 63 (step SA1).

The gear-shift control determiner 73 of the controller 7 determines whether the acquired engine speed is smaller than the engine speed threshold stored in the memory 75 or not (step SA2). If it is determined that the engine speed is smaller than the engine speed threshold (YES in step SA2), the gear-shift control determiner 73 generates a clutch signal for disengaging the clutch 40 (step SA3). On the other hand, if the gear-shift control determiner 73 determines that the engine speed is greater than or equal to the engine speed threshold (NO in step SA2), the gear-shift control determiner 73 generates a clutch signal for engaging the clutch 40 (step SA4). If the gear-shift control determiner 73 generates the clutch signal for engaging the clutch 40, the controller 7 terminates gear-shift control in accordance with this flow.

After the gear-shift control determiner 73 has generated the clutch signal for disengaging the clutch 40, the gear-shift control determiner 73 determines whether the yaw rate of the vehicle 1 detected by the lean detector 61 is larger than the yaw rate threshold stored in the memory 75 or not (step SA5).

If the gear-shift control determiner 73 determines that the yaw rate is larger than the yaw rate threshold (YES in step SA5), the gear-shift control determiner 73 determines that the vehicle 1 is turning in a lean state.

If the gear-shift control determiner 73 determines that the vehicle 1 is turning in a lean state, the gear-shift control determiner 73 determines that the vehicle speed of the vehicle 1 detected by the vehicle speed detector 63 is larger than zero (step SA6). If the gear-shift control determiner 73 determines that the vehicle speed is larger than zero (YES in step SA6), the gear-shift control determiner 73 determines that the vehicle 1 is coasting. On the other hand, if the gear-shift control determiner 73 determines that the vehicle speed is zero (NO in step SA6), the controller 7 terminates the gear-shift control in accordance with this flow.

If the gear-shift control determiner 73 determines that the vehicle 1 is turning in a lean state and coasting, the gear-shift control determiner 73 generates a gear-shift control determination signal for inhibiting a shift-down of the plurality of gear stages in the multi-stage automatic transmission 12 (step SA8). Thus, the gear-shift signal generator 74 does not generate a gear-shift signal to the multi-stage automatic transmission 12.

On the other hand, if the gear-shift control determiner 73 determines that the yaw rate is less than or equal to the yaw rate threshold (NO in step SA5), the gear-shift control determiner 73 generates a gear-shift control determination signal for permitting a shift-down of the plurality of gear stages in the multi-stage automatic transmission 12 (step SA7). Thus, the gear-shift signal generator 74 generates a gear-shift signal to the multi-stage automatic transmission 12.

After the processes in steps SA7 and SA8, this flow is finished.

In the manner described above, while the vehicle 1 is turning in a lean state and the vehicle 1 is coasting in the non-transfer state of the driving force in the multi-stage automatic transmission 12, the controller 7 inhibits a shift-down of the plurality of gear stages in the multi-stage automatic transmission 12.

Accordingly, while the vehicle 1 is turning in a lean state and the vehicle 1 is coasting in the non-transfer state of the driving force in the multi-stage automatic transmission 12, a shift-down of the plurality of gear stages in the multi-stage automatic transmission 12 can reduce a posture change occurring in the vehicle 1 and a driving force as expected by the driver can be obtained. Thus, it is possible to provide the vehicle 1 that achieves a small posture change in turning and that the driver can easily operate.

In addition, in this embodiment, if the yaw rate is greater than or equal to the yaw rate threshold and the vehicle 1 is coasting in the non-transfer state of the driving force in the multi-stage automatic transmission 12, the controller 7 inhibits a shift-down of the plurality of gear stages in the multi-stage automatic transmission 12.

The yaw rate increases as the turning radius decreases. As the turning radius decreases, the vehicle 1 is more easily affected by a change of a generated driving force. Thus, if the yaw rate is greater than or equal to the yaw rate threshold and the vehicle 1 is coasting in the non-transfer state of the driving force in the multi-stage automatic transmission 12, a shift-down of the plurality of gear stages in the multi-stage automatic transmission 12 is inhibited. Accordingly, a posture change occurring in the vehicle 1 can be reduced, and a driving force as expected by the driver can be obtained. The configuration described above can provide the vehicle 1 that achieves a small posture change in turning and that the driver can easily operate.

### (First Variation of First Embodiment)

In the first embodiment, if the yaw rate of the vehicle 1 detected by the lean detector 61 is larger than the yaw rate threshold, the controller 7 inhibits a shift-down of the plurality of gear stages in the multi-stage automatic transmission 12.

Alternatively, the controller 107 (gear-shift controller) may inhibit a shift-down of the plurality of gear stages in the multi-stage automatic transmission 12 if the yaw rate of the vehicle 1 detected by the lean detector 61 is greater than or equal to the yaw rate threshold, the lean angle obtained from the lean angular velocity of the vehicle 1 detected by the lean detector 61 is greater than or equal to the lean angle threshold, and the vehicle 1 is coasting in the non-transfer state of the driving force in the multi-stage automatic transmission 12.

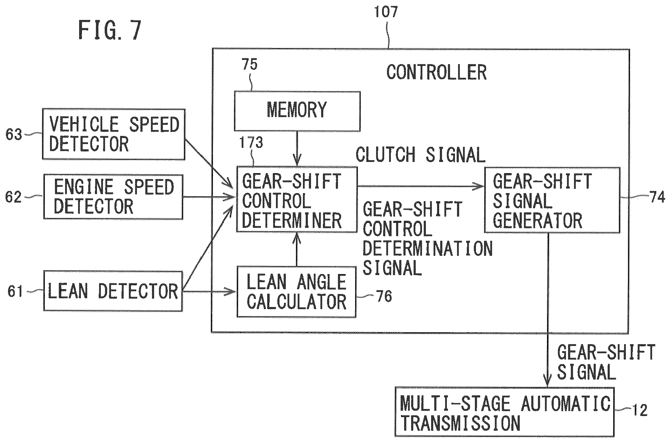

FIG. 7 is a block diagram of a controller 107 according to this variation. The controller 107 is different from the controller 7 of the first embodiment in including a lean angle calculator 76 that calculates a lean angle from a lean angular velocity detected by the lean detector 61 and in that the gear-shift control determiner 173 determines whether or not a shift-down of the plurality of gear stages in the multi-stage automatic transmission 12 is permitted by using the yaw rate and the lean angle. The other part of the configuration of the controller 107 is similar to that of the controller 7 of the first embodiment, and thus, the configuration of the controller 107 will not be described.

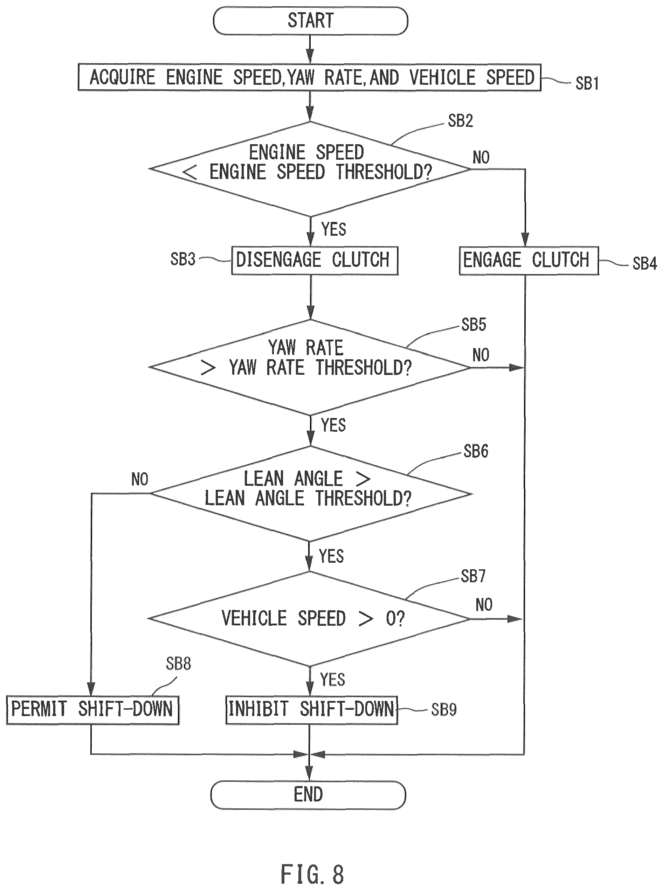

FIG. 8 shows a flow of an operation of the controller 107 in this variation. The operation of the controller 107 in this variation will now be described with reference to FIG. 8.

When the flow shown in FIG. 8 starts, the controller 107 first acquires respective data on a rotation speed of the engine 11 of the vehicle 1 detected by the engine speed detector 62, a yaw rate of the vehicle 1 detected by the lean detector 61, a lean angle calculated by the lean angle calculator 76, and a vehicle speed of the vehicle 1 detected by the vehicle speed detector 63 (step SB1).

The gear-shift control determiner 173 of the controller 107 determines whether the acquired engine speed is smaller than an engine speed threshold stored in the memory 75 or not (step SB2). If the gear-shift control determiner 173 determines that the engine speed is smaller than the engine speed threshold (YES in step SB2), the gear-shift control determiner 173 generates a clutch signal for disengaging the clutch 40 (step SB3). On the other hand, if the gear-shift control determiner 173 determines that the engine speed is greater than or equal to the engine speed threshold (NO in step SB2), the gear-shift control determiner 173 generates a clutch signal for engaging the clutch 40 (step SB4). If the gear-shift control determiner 173 generates a clutch signal for engaging the clutch 40, the controller 107 terminates gear-shift control in accordance with this flow.

After the gear-shift control determiner 173 has generated the clutch signal for disengaging the clutch 40, the gear-shift control determiner 173 determines whether the yaw rate of the vehicle 1 detected by the lean detector 61 is larger than the yaw rate threshold stored in the memory 75 or not (step SB5).

If the gear-shift control determiner 173 determines that the yaw rate is larger than the yaw rate threshold (YES in step SB5), the gear-shift control determiner 173 determines whether the lean angle is larger than the lean angle threshold or not (step SB6). On the other hand, if the gear-shift control determiner 173 determines that the yaw rate is less than or equal to the yaw rate threshold (NO in step SB5), the controller 107 terminates gear-shift control in accordance with this flow.

If the gear-shift control determiner 173 determines that the lean angle is larger than the lean angle threshold (YES in step SB6), the gear-shift control determiner 173 determines that the vehicle 1 is turning in a lean state.

If the gear-shift control determiner 173 determines that the vehicle 1 is turning in a lean state, the gear-shift control determiner 173 determines whether the vehicle speed of the vehicle 1 detected by the vehicle speed detector 3 is larger than zero or not (step SB7). If the gear-shift control determiner 173 determines that the vehicle speed is larger than zero (YES in step SB7), the gear-shift control determiner 173 determines that the vehicle 1 is coasting. On the other hand, if the gear-shift control determiner 173 determines that the vehicle speed is zero (NO in step SA6), the controller 107 terminates the gear-shift control in accordance with this flow.

If the gear-shift control determiner 173 determines that the vehicle 1 is turning in a lean state and coasting, the gear-shift control determiner 173 generates a gear-shift control determination signal for inhibiting a shift-down of the plurality of gear stages in the multi-stage automatic transmission 12 (step SB9). Thus, the gear-shift signal generator 74 does not generate a gear-shift signal to the multi-stage automatic transmission 12.

On the other hand, if the gear-shift control determiner 173 determines that the lean angle is less than or equal to the lean angle threshold (NO in step SB6), the gear-shift control determiner 173 generates a gear-shift control determination signal for permitting a shift-down of the plurality of gear stages in the multi-stage automatic transmission 12 (step SB8). Thus, the gear-shift signal generator 74 generates a gear-shift signal to the multi-stage automatic transmission 12.

After the processes in steps SB8 and SB9, the controller 107 terminates the operation in accordance with this flow.

In the manner described above, while the vehicle 1 is turning in a lean state and the vehicle 1 is coasting in the non-transfer state of the driving force in the multi-stage automatic transmission 12, the controller 107 inhibits a shift-down of the plurality of gear stages in the multi-stage automatic transmission 12.

As the yaw rate increases and the lean angle increases, the vehicle 1 is more easily affected by a change of a generated driving force. Thus, if the yaw rate and the lean angle are greater than or equal to the yaw rate threshold and the lean angle threshold, respectively, and the vehicle 1 is coasting in the non-transfer state of the driving force in the multi-stage automatic transmission 12, a shift-down of the plurality of gear stages in the multi-stage automatic transmission 12 is inhibited. Accordingly, a posture change occurring in the vehicle 1 can be reduced, and a driving force as expected by the driver can be obtained. The configuration described above can provide the vehicle 1 that achieves a small posture change in turning and that the driver can easily operate.

### (Second Variation of First Embodiment)

A controller 207 (gear-shift controller) may use the vehicle speed of the vehicle 1 instead of the yaw rate to determine whether or not a shift-down of the plurality of gear stages in the multi-stage automatic transmission 12 is inhibited. That is, the controller 207 may perform gear-shift control of the multi-stage automatic transmission 12 based on the vehicle speed detected by the vehicle speed detector 63 and the lean angle calculated by the lean angle calculator 76 by using the lean angular velocity detected by the lean detector 61.

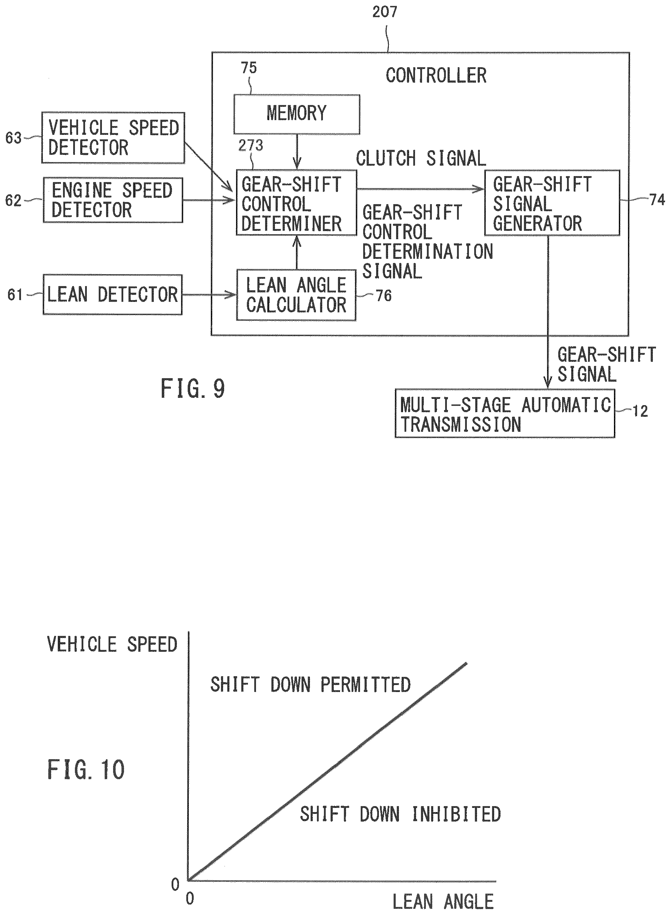

FIG. 9 is a block diagram of the controller 207 according to this variation. The controller 207 has the same configuration as that of the controller 107 of the first variation, except for that the vehicle speed detected by the vehicle speed detector 63, is input to the controller 207 instead of the yaw rate detected by the lean detector 61, and that the gear-shift control determiner 273 determines whether or not a shift-down of the plurality of gear stages in the multi-stage automatic transmission 12 is permitted by using the vehicle speed and the lean angle. Thus, the configuration of the controller 207 will not be described in detail.

The memory 75 of the controller 207 stores gear-shift control determination data for determining whether a shift-down of gear stages in the multi-stage automatic transmission 12 is permitted or inhibited by the gear-shift control determiner 273. Based on the gear-shift control determination data, if the posture of the vehicle 1 is predicted to change due to a shift-down of the plurality of gear stages in the multi-stage automatic transmission 12, the gear-shift control determiner 273 inhibits a shift-down of the gear stages, whereas if the posture of the vehicle 1 is predicted not to change significantly due to the a shift-down of the gear stages, the gear-shift control determiner 273 permits a shift-down of the gear stages.

The gear-shift control determination data includes information on a range where a shift-down of the plurality of gear stages in the multi-stage automatic transmission 12 is permitted and information on a range where a shift-down of the plurality of gear stages is inhibited, in a relationship between the lean angle and the vehicle speed of the vehicle 1.

In this embodiment, as shown in the example in FIG. 10, the gear-shift control determination data includes data concerning a threshold between a range where a shift-down of the plurality of gear stages in the multi-stage automatic transmission 12 is permitted (i.e., a range of "shift-down permitted" in FIG. 10) and a range where a shift-down of the gear stages is inhibited (i.e., a range of "shift-down inhibited" in FIG. 10) in the graph whose abscissa represents the lean angle of the vehicle 1 and ordinate represents the vehicle speed of the vehicle 1.

In the gear-shift control determination data, as the lean angle of the vehicle 1 increases, the threshold of the vehicle speed for inhibiting a shift-down of the plurality of gear stages increases. While the vehicle 1 is turning in a lean state, the influence of a shift-down of the plurality of gear stages in the multi-stage automatic transmission 12 with respect to the lean angle of the vehicle 1 varies depending on the lean angle and the vehicle speed of the vehicle 1. On the other hand, as in the configuration described above, changing of the threshold of the vehicle speed for inhibiting a shift-down of the plurality of gear stages in accordance with the lean angle of the vehicle 1 further ensures reduction of a posture change occurring in the vehicle 1 while the vehicle 1 is turning in a lean state.

The vehicle speed and the lean angle relate to the posture of the vehicle 1. Thus, by changing the threshold of the vehicle speed in accordance with the lean angle as described above, the range where the posture change of the vehicle 1 is permitted varies. Thus, by changing the threshold of the vehicle speed as described above, the range where a shift-down of the plurality of gear stages in the multi-stage automatic transmission 12 is inhibited is changed in accordance with the lean angle.

By using the gear-shift control determination data as described above, the gear-shift control determiner 273 determines whether to permit a shift-down of the gear stages in the multi-stage automatic transmission 12 based on the lean angle of the vehicle 1 calculated by the lean angle calculator 76 and the vehicle speed of the vehicle 1 detected by the vehicle speed detector 63, and outputs a gear-shift control determination signal in accordance with the determination result.

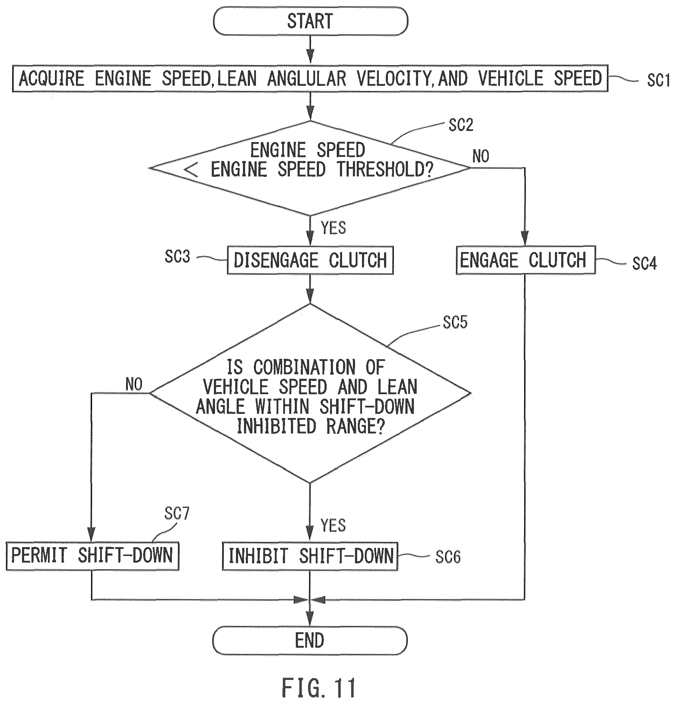

Next, gear-shift control by the controller 207 having the configuration as described above will be described. FIG. 11 shows an operation flow of gear-shift control by the controller 207.

When the flow shown in FIG. 11 starts, the controller 207 first acquires data on the engine speed detected by the engine speed detector 62, the lean angular velocity of the vehicle 1 detected by the lean detector 61, and the vehicle speed of the vehicle 1 detected by the vehicle speed detector 63 (step SC1).

The gear-shift control determiner 273 of the controller 207 determines whether the acquired engine speed is smaller than the engine speed threshold stored in the memory 75 or not (step SC2). If the gear-shift control determiner 273 determines that the engine speed is smaller than the engine speed threshold (YES in step SC2), the gear-shift control determiner 273 generates a clutch signal for disengaging the clutch 40 (step SC3). On the other hand, if the gear-shift control determiner 273 determines that the engine speed is greater than or equal to the engine speed threshold (NO in step SC2), the gear-shift control determiner 273 generates a clutch signal for engaging the clutch 40 (step SC4). If the gear-shift control determiner 273 generates a clutch signal for engaging the clutch 40, the controller 207 terminates gear-shift control in accordance with this flow.

After the clutch 40 has been disengaged, the gear-shift control determiner 273 of the controller 207 determines whether or not a shift-down of the plurality of gear stages in the multi-stage automatic transmission 12 is permitted from the gear-shift control determination data stored in the memory 75 by using the vehicle speed and the lean angle (step SC5).

Based on the vehicle speed and the lean angle, the gear-shift control determiner 273 determines whether or not the posture of the vehicle 1 changes in a case where the plurality of gear stages in the multi-stage automatic transmission 12 is shifted down. If the posture of the vehicle 1 is predicted to change, the controller 207 inhibits a shift-down of the gear stages in the multi-stage automatic transmission 12. On the other hand, if the posture of the vehicle 1 is not predicted to change significantly, the controller 207 permits a shift-down of the plurality of gear stages in the multi-stage automatic transmission 12.

In this embodiment, the gear-shift control determiner 273 determines whether a combination of the vehicle speed and the lean angle in the gear-shift control determination data is within the shift-down inhibited range where a shift-down of the plurality of gear stages in the multi-stage automatic transmission 12 is inhibited or within the shift-down permitted range where a shift-down of the plurality of gear stages in the multi-stage automatic transmission 12 is permitted.

In step SC5, if it is determined that the combination of the vehicle speed and the lean angle is within the shift-down inhibited range where a shift-down of the plurality of gear stages in the multi-stage automatic transmission 12 is inhibited (YES), the controller 207 proceeds to step SC6, and inhibits a shift-down of the plurality of gear stages in the multi-stage automatic transmission 12. At this time, the gear-shift control determiner 273 generates a gear-shift control determination signal for inhibiting a shift-down of gear stages in the multi-stage automatic transmission 12, and outputs the signal.

On the other hand, if the combination of the vehicle speed and the lean angle is not within the shift-down inhibited range where a shift-down of the gear stages in the multi-stage automatic transmission 12 is inhibited (NO), that is, it is determined that the combination is within the a shift-down permitted range where a shift-down of the plurality of gear stages in the multi-stage automatic transmission 12 is permitted, the controller 207 proceeds to step SC7, and permits a shift-down of the plurality of gear stages in the multi-stage automatic transmission 12. In this step SC7, the gear-shift control determiner 273 generates a gear-shift control determination signal for permitting a shift-down of the plurality of gear stages in the multi-stage automatic transmission 12, and outputs the signal.

After the processes in steps SC6 and SC7, this flow is finished.

In the manner described above, based on the vehicle speed and the lean angle of the vehicle 1, the controller 207 predicts a posture change of the vehicle 1 due to a shift-down of the plurality of gear stages in the multi-stage automatic transmission 12 while the vehicle 1 is turning in a lean state, and if a posture change of the vehicle 1 is predicted, the controller 207 inhibits a shift-down of the plurality of gear stages in the multi-stage automatic transmission 12.

In this manner, a posture change occurring in the vehicle 1 can be reduced while the vehicle 1 is turning in a lean state.

For example, at a low vehicle speed, if the lean angle is large, the vehicle 1 turning in a lean state is susceptible to influence of a change of a driving force. On the other hand, at a high vehicle speed, even if the lean angle is large, the vehicle 1 turning in a lean state is not susceptible to influence of a change of a driving force. As described above, in the vehicle 1 turning in a lean state, influence of a change of a driving force varies depending on the lean angle and the vehicle speed.

Thus, as described above, in the case where a driving force is in the non-transfer state in the multi-stage automatic transmission 12, inhibiting a shift-down of the plurality of gear stages in the multi-stage automatic transmission 12 based on the lean angle and the vehicle speed can reduce a posture change occurring in the vehicle 1 and obtain a driving force as expected by the driver. The configuration described above can provide the vehicle 1 that achieves a small posture change in turning and that the driver can easily operate.

### (Second Embodiment)

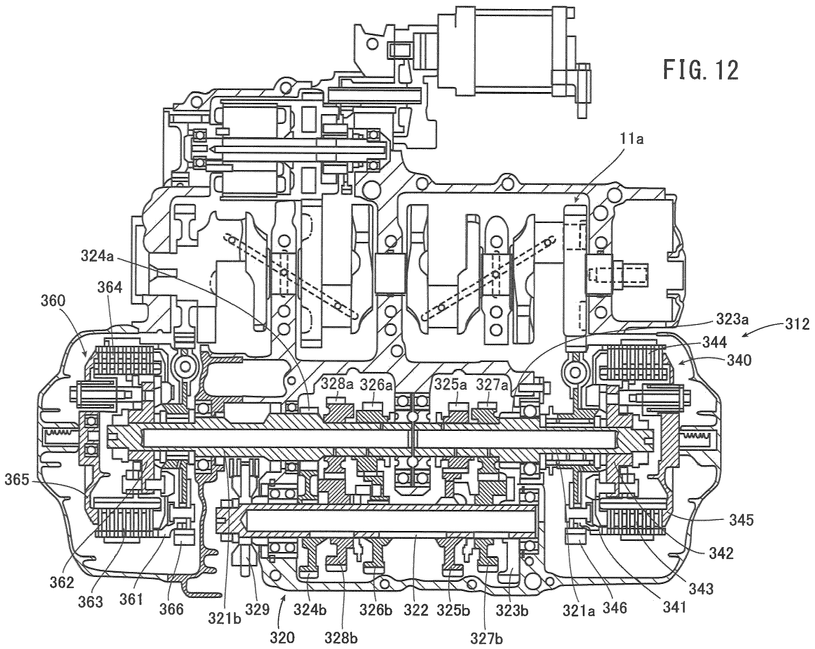

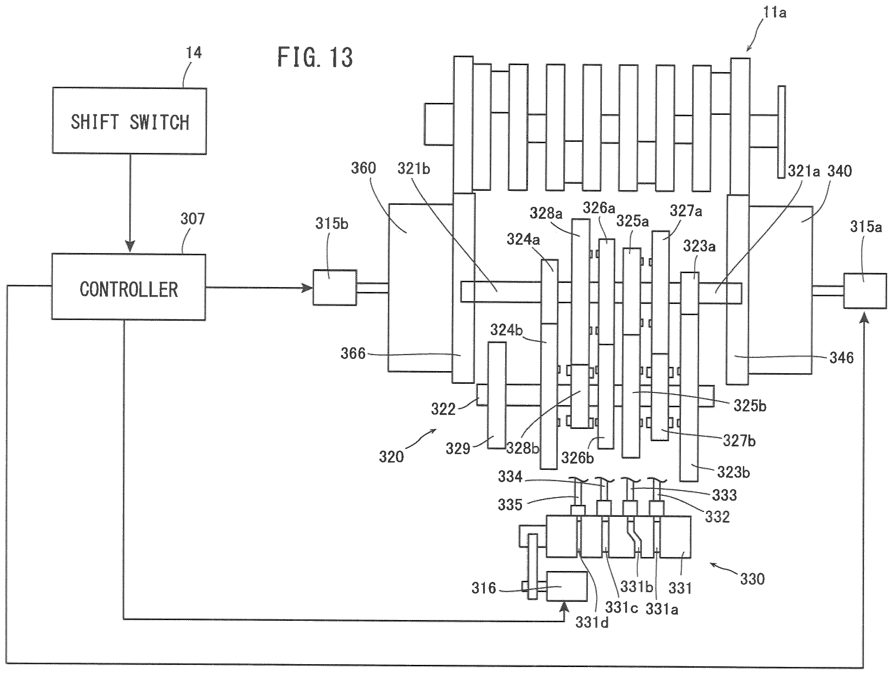

FIG. 12 illustrates a schematic configuration of a multi-stage automatic transmission 312 of a vehicle according to a second embodiment. FIG. 13 schematically illustrates the configuration of the multi-stage automatic transmission 312 for description. The multi-stage automatic transmission 312 of this embodiment is different from the configuration of the first embodiment in including two clutches of a first clutch 340 and a second clutch 360. In the following description, components similar to those of the first embodiment are denoted by the same reference characters and will not be described again, and only components different from those of the first embodiment will be described.

The multi-stage automatic transmission 312 includes a plurality of friction driving clutches, and achieves smooth gear-shift by alternately performing power transfer in odd-number stages and in even-number stages out of the gear stages with the first clutch 340 and the second clutch 360. The multi-stage automatic transmission 312 includes a transmission mechanism 320, the first clutch 340, the second clutch 360, and a shift mechanism.

The transmission mechanism 320 is connected to a crankshaft 11a of an engine 11. The transmission mechanism 320 changes a torque transferred from the crankshaft 11a to a predetermined torque, and outputs the predetermined torque.

The first clutch 340 and the second clutch 360 are configured to transfer rotation of the crankshaft 11a to the transmission mechanism 320. That is, the first clutch 340 and the second clutch 360 are configured to switch between transfer and non-transfer of rotation of the crankshaft 11a to the transmission mechanism 320.

The first clutch 340 is driven by a first clutch actuator 315a described later. The first clutch 340 transfers a driving force in odd-number stages (i.e., first-speed stage, third-speed stage, and fifth-speed stage) of the transmission mechanism 320.

The second clutch 360 is driven by a second clutch actuator 315b described later. The second clutch 360 transfers a driving force in even-number stages (i.e., second-speed stage, fourth-speed stage, and six-speed stage) of the transmission mechanism 320.

The shift mechanism performs a gear-shift of the transmission mechanism 320 through a sequential shift mechanism 330 described later, and retains a gear stage selected by the transmission mechanism 320 until next gear-shift is performed by the transmission mechanism 320. A configuration of the shift mechanism is similar to the configuration of the shift mechanism 50 of the first embodiment, and thus, will not be described in detail.

As described above, a driving force is transferred to the transmission mechanism 320 of the multi-stage automatic transmission 312 from the engine 11 through the first clutch 340 or the second clutch 360.

A configuration of the multi-stage automatic transmission 312 including the transmission mechanism 320, the first clutch 340, the second clutch 360, and the shift mechanism will now be described in detail.

Each of the first clutch 340 and the second clutch 360 is, for example, a multiplate friction clutch. The first clutch 340 includes a bottomed cylindrical clutch housing 341, a bottomed cylindrical clutch boss 342, a plurality of friction plates 343 and clutch plates 344 that are friction discs, a pressure plate 345, and an input gear 346. The second clutch 360 includes a bottomed cylindrical clutch housing 361, a bottomed cylindrical clutch boss 362, a plurality of friction plates 363 and clutch plates 364 that are friction discs, a pressure plate 365, and an input gear 366.

The first clutch 340 and the second clutch 360 have the same configuration. The configuration of the first clutch 340 and the second clutch 360 is similar to the configuration of the clutch 40 in the first embodiment. Thus, the configurations of the first clutch 340 and the second clutch 360 will not be described in detail.

The clutch boss 342 of the first clutch 340 is coupled to an end portion of a first main shaft 321a described later in the transmission mechanism 320. The clutch housing 341 of the first clutch 340 is connected to the input gear 346 that meshes with a gear provided on the crankshaft 11a. The plurality of friction plates 343 are attached to the inner peripheral surface of the clutch housing 341. The plurality of clutch plates 344 are attached to the outer peripheral surface of the clutch boss 342. The friction plates 343 and the clutch plates 344 are engaged or disengaged to thereby enable the first clutch 340 to switch between transfer and non-transfer of rotation of the crankshaft 11a to the first main shaft 321a of the transmission mechanism 320.

The clutch boss 362 of the second clutch 360 is coupled to an end portion of a second main shaft 321b described later in the transmission mechanism 320. The clutch housing 361 of the second clutch 360 is connected to the input gear 366 that meshes with a gear provided on the crankshaft 11a. The plurality of friction plates 363 are attached to the inner peripheral surface of the clutch housing 361. The plurality of clutch plates 364 are attached to the outer peripheral surface of the clutch boss 362. The friction plates 363 and the clutch plates 364 are engaged or disengaged to thereby enable the second clutch 360 to switch between transfer and non-transfer of rotation of the crankshaft 11a to the second main shaft 321b of the transmission mechanism 320.

Engagement and disengagement between the friction plates 343 and the clutch plates 344 in the first clutch 340 are performed by driving the first clutch actuator 315a as illustrated in FIG. 13. Engagement and disengagement between the friction plates 363 and the clutch plates 364 in the second clutch 360 are performed by driving the second clutch actuator 315b as illustrated in FIG. 13.

The transmission mechanism 320 is a multistep transmission mechanism. The transmission mechanism 320 includes the first main shaft 321a, the second main shaft 321b, the output shaft 322, a plurality of driving gears, a plurality of driven gears, and the sequential shift mechanism 330 (see FIG. 13).

The first main shaft 321a and the second main shaft 321b are disposed on the same axis such that one end of the first main shaft 321a faces one end of the second main shaft 321b. The first main shaft 321a and the second main shaft 321b are rotatable independently of each other. The other end of the first main shaft 321a is coupled to the clutch boss 342 of the first clutch 340. The other end of the second main shaft 321b is coupled to the clutch boss 362 of the second clutch 360.

The first main shaft 321a is provided with, as part of the plurality of driving gears, a first-speed fixing gear 323a, a first spline gear 325a, and a fifth-speed gear 327a constituting each of odd-number stages including a first-speed gear, a third-speed gear, and a fifth-speed gear. The first-speed fixing gear 323a, the first spline gear 325a, and the fifth-speed gear 327a are arranged on the first main shaft 321a in the order of the first-speed fixing gear 323a, the fifth-speed gear 327a, and the first spline gear 325a from an end portion to which the first clutch 340 is connected.

The first-speed fixing gear 323a is fixed to the first main shaft 321a, and rotates together with the first main shaft 321a. The first-speed fixing gear 323a meshes with a first-speed gear 323b described later disposed on the output shaft 322.

The fifth-speed gear 327a is rotatably attached on the first main shaft 321a with movement in the axial direction of the first main shaft 321a restricted. The fifth-speed gear 327a meshes with a third spline gear 327b described later of the output shaft 322.

The first spline gear 325a is attached on the first main shaft 321a to be rotatable together with the first main shaft 321a and movable along the axial direction of the first main shaft 321a. The first spline gear 325a meshes with a third-speed gear 325b of the output shaft 322.

The first spline gear 325a is connected to a shift fork 333 described later of the sequential shift mechanism 330, and moves in the axial direction on the first main shaft 321a by movement of the shift fork 333. The first spline gear 325a moves on the first main shaft 321a as described above to be thereby connected to the fifth-speed gear 327a. Accordingly, the fifth-speed gear 327a can rotate together with the first main shaft 321a.

The second main shaft 321b is provided with, as part of the plurality of driving gears, a second-speed fixing gear 324a, a second spline gear 326a, and a sixth-speed gear 328a constituting each of even-number stages including a second-speed gear, a fourth-speed gear, and a sixth-speed gear. The second-speed fixing gear 324a, the second spline gear 326a, and the sixth-speed gear 328a are arranged on the second main shaft 321b in the order of the second-speed fixing gear 324a, the sixth-speed gear 328a, and the second spline gear 326a from an end portion to which the second clutch 360 is connected.

The second-speed fixing gear 324a is fixed to the second main shaft 321b, and rotates together with the second main shaft 321b. The second-speed fixing gear 324a meshes with a second-speed gear 324b described later disposed on the output shaft 322.

The sixth-speed gear 328a is rotatably attached on the second main shaft 321b with movement in the axial direction of the second main shaft 321b restricted. The sixth-speed gear 328a meshes with a fourth spline gear 328b described later of the output shaft 322.

The second spline gear 326a is attached on the second main shaft 321b to be rotatable together with the second main shaft 321b and movable along the axial direction of the second main shaft 321b. The second spline gear 326a meshes with a fourth-speed gear 326b of the output shaft 322.

The second spline gear 326a is connected to a shift fork 334 described later of the sequential shift mechanism 330, and moves in the axial direction on the second main shaft 321b by movement of the shift fork 334. The second spline gear 326a moves on the second main shaft 321b as described above to be thereby connected to the sixth-speed gear 328a. Accordingly, the sixth-speed gear 328a can rotate together with the second main shaft 321b.

The output shaft 322 is provided with the first-speed gear 323b, the third spline gear 327b, the third-speed gear 325b, the fourth-speed gear 326b, the fourth spline gear 328b, the second-speed gear 324b, and a sprocket 329 in this order from a side close to the first clutch 340. The first-speed gear 323b, the third-speed gear 325b, the fourth-speed gear 326b, and the second-speed gear 324b are provided on the output shaft 322 to be rotatable with respect to the output shaft 322 with movement along the axial direction of the output shaft 322 restricted.

The third spline gear 327b and the fourth spline gear 328b are attached on the output shaft 322 to rotate together with the output shaft 322 and to be movable along the axial direction of the output shaft 322. The third spline gear 327b meshes with the fifth-speed gear 327a of the first main shaft 321a. The fourth spline gear 328b meshes with the sixth-speed gear 328a of the second main shaft 321b.

The third spline gear 327b is connected to a shift fork 332 described later of the sequential shift mechanism 330, and is caused to move on the output shaft 322 along the axial direction by movement of the shift fork 332. With this movement on the output shaft 322, the third spline gear 327b is connected to the first-speed gear 323b or the third-speed gear 325b. Accordingly, the first-speed gear 323b or the third-speed gear 325b is allowed to rotate together with the output shaft 322.

The fourth spline gear 328b is connected to a shift fork 335 described later of the sequential shift mechanism 330, and is caused to move on the output shaft 322 along the axial direction by movement of the shift fork 335. With this movement on the output shaft 322, the fourth spline gear 328b is connected to the second-speed gear 324b or the fourth-speed gear 326b. Accordingly, the second-speed gear 324b or the fourth-speed gear 326b is allowed to rotate together with the output shaft 322.

The sprocket 329 rotates together with the output shaft 322. A chain, not shown, is attached to the sprocket 329. That is, rotation of the output shaft 322 is output through the sprocket 329 and the chain.

The first spline gear 325a, the second spline gear 326a, the third spline gear 327b, and the fourth spline gear 328b function as transmission gears, and also function as dog selectors. The first spline gear 325a, the second spline gear 326a, the third spline gear 327b, and the fourth spline gear 328b move along the axial direction on the first main shaft 321a, the second main shaft 321b, or the output shaft 322 to be thereby connected to the transmission gears adjacent to these gears in the axial direction by a dog mechanism, not shown. The dog mechanism is similar to a configuration of a known dog mechanism (e.g., JP 2010-133555A), and thus, will not be described in detail.

For example, in a case where the gear stage of the transmission mechanism 320 is a first speed, the first spline gear 325a on the first main shaft 321a meshes with the third-speed gear 325b on the output shaft 322. The third spline gear 327b on the output shaft 322 is connected to the first-speed gear 323b. Accordingly, the first-speed gear 323b is fixed to the output shaft 322 through the third spline gear 327b to be rotatable together with the output shaft 322. Thus, rotation is transferred from the first main shaft 321a to the output shaft 322 through the first-speed gear 323b meshing with the first-speed fixing gear 323a fixed to the first main shaft 321a. At this time, the third-speed gear 325b meshing with the first spline gear 325a on the first main shaft 321a rotates with respect to the output shaft 322.

In a case where the gear stage of the transmission mechanism 320 is a second speed, the second spline gear 326a on the second main shaft 321b meshes with the fourth-speed gear 326b on the output shaft 322. The fourth spline gear 328b on the output shaft 322 is connected to the second-speed gear 324b. Accordingly, the second-speed gear 324b is fixed to the output shaft 322 through the fourth spline gear 328b to be rotatable together with the output shaft 322. Thus, rotation is transferred from the second main shaft 321b to the output shaft 322 through the second-speed gear 324b meshing with the second-speed fixing gear 324a fixed to the second main shaft 321b. At this time, the fourth-speed gear 326b meshing with the second spline gear 326a on the second main shaft 321b rotates with respect to the output shaft 322.

In a case where the gear stage of the transmission mechanism 320 is a third speed, the first spline gear 325a on the first main shaft 321a meshes with the third-speed gear 325b on the output shaft 322. The third spline gear 327b on the output shaft 322 is connected to the third-speed gear 325b. Accordingly, the third-speed gear 325b is fixed to the output shaft 322 through the third spline gear 327b to be rotatable together with the output shaft 322. Thus, rotation is transferred from the first main shaft 321a to the output shaft 322 through the third-speed gear 325b meshing with the first spline gear 325a that rotates together with the first main shaft 321a.

In a case where the gear stage of the transmission mechanism 320 is a fourth speed, the second spline gear 326a on the second main shaft 321b meshes with the fourth-speed gear 326b on the output shaft 322. The fourth spline gear 328b on the output shaft 322 is connected to the fourth-speed gear 326b. Accordingly, the fourth-speed gear 326b is fixed to the output shaft 322 through the fourth spline gear 328b to be rotatable together with the output shaft 322. Thus, rotation is transferred from the second main shaft 321b to the output shaft 322 through the fourth-speed gear 326b meshing with the second spline gear 326a that rotates together with the second main shaft 321b.

In a case where the gear stage of the transmission mechanism 320 is a fifth speed, the first spline gear 325a on the first main shaft 321a is connected to the fifth-speed gear 327a. Accordingly, the fifth-speed gear 327a is fixed to the first main shaft 321a through the first spline gear 325a to be rotatable together with the first main shaft 321a. The third spline gear 327b on the output shaft 322 meshes with the fifth-speed gear 327a on the first main shaft 321a at a position at which the third spline gear 327b is connected to none of the first-speed gear 323b and the third-speed gear 325b. Thus, rotation is transferred from the first main shaft 321a to the output shaft 322 through the fifth-speed gear 327a connected to the first spline gear 325a that rotates together with the first main shaft 321a and through the third spline gear 327b on the output shaft 322.

In a case where the gear stage of the transmission mechanism 320 is a sixth speed, the second spline gear 326a on the second main shaft 321b is connected to the sixth-speed gear 328a. Accordingly, the sixth-speed gear 328a is fixed to the second main shaft 321b through the second spline gear 326a to be rotatable together with the second main shaft 321b. The fourth spline gear 328b on the output shaft 322 meshes with the sixth-speed gear 328a on the second main shaft 321b at a position at which the fourth spline gear 328b is connected to none of the second-speed gear 324b and the fourth-speed gear 326b. Thus, rotation is transferred from the second main shaft 321b to the output shaft 322 through the sixth-speed gear 328a connected to the second spline gear 326a that rotates together with the second main shaft 321b and through the fourth spline gear 328b on the output shaft 322.

The sequential shift mechanism 330 includes a shift cam 331 and the shift forks 332 through 335. As illustrated in FIG. 13, cam grooves 331a through 331d are formed on the outer peripheral surface of the shift cam 331 of the sequential shift mechanism 330. The cam grooves 331a through 331d are arranged along the axial direction of the shift cam 331 and each extend circumferentially on the outer peripheral surface of the shift cam 331. Each of the cam grooves 331a through 331d is disposed on the outer peripheral surface of the shift cam 331 such that the position of the shift cam 331 in the axial direction changes in accordance with the position of the shift cam 331 in the circumferential direction. One end of each of the shift forks 332 through 335 is located on an associated one of the cam grooves 331a through 331d. Configurations of the cam grooves 331a through 331d of this embodiment are similar to those of known cam grooves (e.g., Japanese Patent Application Publication No. 2010-133555), and thus, will not be described in detail.

The other end of the shift fork 332 is connected to the third spline gear 327b. The other end of the shift fork 333 is connected to the first spline gear 325a. The other end of the shift fork 334 is connected to the second spline gear 326a. The other end of the shift fork 335 is connected to the fourth spline gear 328b. Accordingly, when the shift forks 332 through 335 move in the axial direction along the cam grooves 331a through 331d of the shift cam 331, the first spline gear 325a, the second spline gear 326a, the third spline gear 327b, and the fourth spline gear 328b also move in the axial direction. A driving force in a rotation direction is applied to the shift cam 331 by a shift actuator 316.

As described above, with the movement of the first spline gear 325a, the second spline gear 326a, the third spline gear 327b, and the fourth spline gear 328b in accordance with the movement of the shift forks 332 through 335, changing to each gear stage is performed in the transmission mechanism 320 as described above.

In the multi-stage automatic transmission 312 having the configuration described above, in changing the gear stages in response to an operation of a shift switch 14 by a driver, the shift actuator 316, the first clutch actuator 315a, and the second clutch actuator 315b are driven and controlled by the controller 307. That is, the controller 307 outputs control signals to the shift actuator 316, the first clutch actuator 315a, and the second clutch actuator 315b.

The controller 307 disengages one of the first clutch 340 or the second clutch 360, and then, changes the gear stage on one of the first main shaft 321a or the second main shaft 321b connected to the disengaged clutch. Thereafter, the controller 307 causes the disengaged one of the first clutch 340 or the second clutch 360 to transition from the disengaged state to an engaged state through a semi-clutch state, while causing the engaged one of the first clutch 340 or the second clutch 360 to transition from the engaged state to the disengaged state through the semi-clutch state.

As one example of a gear-shift operation of the multi-stage automatic transmission 312, a case of shifting up the gear stage from a second speed to a third speed will be described. In this embodiment, the vehicle includes the shift switch 14 (gear-shift operator) for allowing a driver to instruct changing of the gear stages to the multi-stage automatic transmission 312.

When the driver of the vehicle operates the shift switch 14 to perform a shift-up from the second speed to the third speed, the controller 307 controls driving of the first clutch actuator 315a so as to disengage the first clutch 340. Accordingly, torque transferred from the crankshaft 11a to the first main shaft 321a by way of the first clutch 340 is blocked. In this case, a torque of the crankshaft 11a is transferred to the output shaft 322 through the second clutch 360, the second main shaft 321b, the second-speed fixing gear 324a, the second-speed gear 324b, and the fourth spline gear 328b.

Next, the controller 307 controls driving of the shift actuator 316 to thereby cause the shift cam 331 to rotate by a predetermined angle. Accordingly, the shift fork 332 moves in the axial direction and connects the third spline gear 327b on the output shaft 322 to the third-speed gear 325b. Thus, the first main shaft 321a and the output shaft 322 are connected to each other to enable torque transfer through the first spline gear 325a, the third-speed gear 325b, and the third spline gear 327b. It should be noted that since the first clutch 340 is disengaged as described above, a torque of the crankshaft 11a is not transferred from the first main shaft 321a to the output shaft 322.

The controller 307 controls driving of the first clutch actuator 315a and the second clutch actuator 315b to thereby cause the first clutch 340 to transition from the disengaged state to the engaged state through the semi-clutch state, while causing the second clutch 360 to transition from the engaged state to the disengaged state through the semi-clutch state.

In this case, a torque transferred from the crankshaft 11a to the output shaft 322 through the first clutch 340, the first main shaft 321a, the first spline gear 325a, the third-speed gear 325b, and the third spline gear 327b gradually increases. On the other hand, a torque transferred from the crankshaft 11a to the output shaft 322 through the second clutch 360, the second main shaft 321b, the second-speed fixing gear 324a, the second-speed gear 324b, and the fourth spline gear 328b gradually decreases, and becomes zero when the second clutch 360 becomes in a disengaged state.

As described above, in the multi-stage automatic transmission 312 of this embodiment, by changing the gear stages by using two clutches of the first clutch 340 and the second clutch 360, it is possible to prevent a torque from abruptly changing in changing the gear stages.

In the multi-stage automatic transmission 312 of this embodiment, at least one of the first clutch 340 or the second clutch 360 is always in the engaged state, and thus, a decrease in a driving force by clutch disengagement as described in the multi-stage automatic transmission 12 of the first embodiment does not occur. However, in the multi-stage automatic transmission 312, since a driving force increases by a shift-down of the plurality of gear stages, the lean angle of the vehicle turning in a lean state decreases. As described above, the posture of the vehicle changes by a shift-down of the plurality of gear stages in the multi-stage automatic transmission 312.

The shift-down is a gear-shift operation of changing gear stages in order to increase a gear-shift ratio. The shift-up is a gear-shift operation of changing gear stages in order to reduce a gear-shift ratio.

In this embodiment, in stopping of the vehicle, the controller 307 shifts down the plurality of gear stages in the multi-stage automatic transmission 312, irrespective of whether or not the shift switch 14 is operated. That is, the controller 307 of this embodiment changes gear stages in the multi-stage automatic transmission 312 in accordance with an operation of the shift switch 14, whereas in stopping of the vehicle, the controller 307 shifts down the plurality of gear stages in the multi-stage automatic transmission 312 irrespective of whether the shift switch 14 is operated or not.

The controller 307 of the multi-stage automatic transmission 312 having the configuration as described in this embodiment also has a configuration similar to that of the controller 7 of the first embodiment. That is, the controller 307 includes the gear-shift control determiner 73, the gear-shift signal generator 74, and the lean angle calculator 76. The configurations thereof are similar to those of the first embodiment, and thus, will not be described in detail.

Similar to the controller 7 of the first embodiment, the controller 307 of this embodiment inhibits a shift-down of the plurality of gear stages in the multi-stage automatic transmission 312 if the yaw rate of the vehicle is greater than or equal to the yaw rate threshold and the vehicle 1 is coasting in the non-transfer stage of a driving force in the multi-stage automatic transmission 312. Note that, in the multi-stage automatic transmission 312, in a case where both of the first clutch 340 and the second clutch 360 are in disengaged states, in a case where the first clutch 340 is in the disengaged state and a driving force is not transferred in even-number stages of the transmission mechanism 320 (in a case where the even-number stages are neutral), or in a case where the second clutch 360 is in the disengaged state and a driving force is not transferred in odd-number stages of the transmission mechanism 320 (in a case where the odd-number stages are neutral), the driving force is in a non-transfer state.

In this manner, in a case where the vehicle is coasting in the non-transfer state of the driving force in the multi-stage automatic transmission 312 while the vehicle is turning in a lean state, a posture change occurring in the vehicle can be reduced.

Even if the vehicle is coasting in the non-transfer state of the driving force in the multi-stage automatic transmission 312 while the vehicle is turning in a lean state, the controller 307 of this embodiment permits a shift-down of the plurality of gear stages in the multi-stage automatic transmission 312 in accordance with an operation of the shift switch 14.

Accordingly, even while the leaning vehicle is turning in a lean state, when a gear-shift operation is performed by the driver, a shift-down of the plurality of gear stages in the multi-stage automatic transmission 312 can be performed. Thus, a gear-shift operation can be performed in accordance with an intention of the driver. This makes it possible to provide a leaning vehicle that a driver easily operates.

Note that if the yaw rate of the vehicle is greater than or equal to the yaw rate threshold and the lean angle is greater than or equal to the lean angle threshold and the vehicle is coasting in the non-transfer state of the driving force in the multi-stage automatic transmission 12, the controller 307 may inhibit a shift-down of the plurality of gear stages in the multi-stage automatic transmission 312, as in the first variation of the first embodiment.

As in the second variation of the first embodiment, the controller 307 may determine whether or not a shift-down of the plurality of gear stages in the multi-stage automatic transmission 12 is permitted from the vehicle speed and the lean angle of the vehicle by using gear-shift control determination data.

### (Other Embodiments)

The embodiments of the present invention have been described above, but the above-described embodiments are merely examples for carrying out the present invention. Therefore, the present invention is not limited to the above-described embodiments and the above-described embodiments can be appropriately modified and implemented without departing from the scope of the claims.

In the embodiments described above, each of the controllers 7, 107, and 307 determines that the vehicle 1 is coasting if the vehicle speed detected by the vehicle speed detector 63 is not zero. Alternatively, the controller may detect whether or not the vehicle is coasting based on, for example, a position change of the vehicle.

In the embodiments described above, each of the controllers 7, 107, 207, and 307 detects whether or not the vehicle 1 is turning in a lean state by using at least one of the yaw rate, the lean angle, or the vehicle speed of the vehicle 1. Alternatively, the controller may detect whether or not the vehicle is turning in a lean state by using another parameter concerning a behavior of the vehicle.

In the embodiments, if the vehicle 1 is turning in a lean state and the vehicle 1 is coasting in a non-transfer state of a driving force in the multi-stage automatic transmission 12 or 312, each of the controllers 7, 107, 207, and 307 inhibits a shift-down of the plurality of gear stages in the multi-stage automatic transmission 12 or 312. If the vehicle is traveling in an upright state, even if the driving force is in the non-transfer state in the multi-stage automatic transmission, the controller may permit a shift-down of the plurality of gear stages in the multi-stage automatic transmission.

In the first embodiment, the controller 7 automatically changes gear stages in the multi-stage automatic transmission 12. In the second embodiment, the controller 307 changes gear stages in the multi-stage automatic transmission 312 in response to an operation of the shift switch 14.

Alternatively, the controller may change the plurality of gear stages in the multi-stage automatic transmission described in the first embodiment in response to an operation of the shift switch. In this case, the controller also shifts down the plurality of gear stages in the multi-stage automatic transmission irrespective of whether or not the shift switch is operated when the vehicle is stopped. Even if the vehicle is coasting in the non-transfer state of the driving force in the multi-stage automatic transmission while the vehicle is turning in a lean state, the controller may permit a shift-down of the plurality of gear stages in the multi-stage automatic transmission in response to an operation of the shift switch.

In the first and second embodiments, the controller calculates a lean angle with the lean angle calculator 76 from the lean angular velocity detected by the lean detector 61. Alternatively, the controller may calculate the lean angle based on a difference between a rotation speed of the front wheel and a rotation speed of the rear wheel. In this case, it may be determined whether or not the vehicle is coasting based on the rotation speed of the front wheel and the rotation speed of the rear wheel.

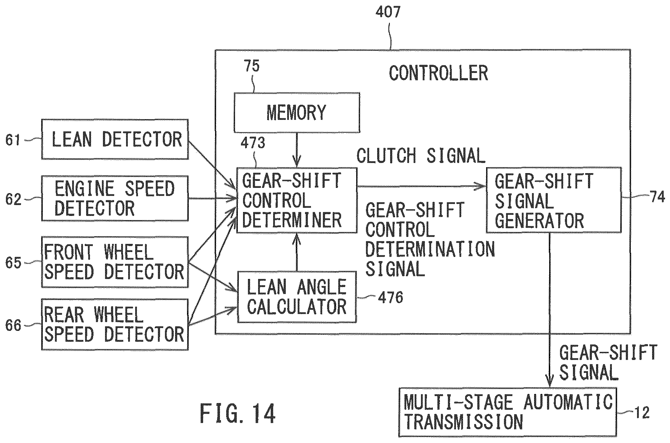

Specifically, as illustrated in FIG. 14, the vehicle includes a front wheel speed detector 65 configured to detect the rotation speed of the front wheel, a rear wheel speed detector 66 configured to detect the rotation speed of the rear wheel, and a controller 407 configured to control driving of the multi-stage automatic transmission. Each of the front wheel speed detector 65 and the rear wheel speed detector 66 may have any configuration as long as the front wheel speed detector 65 and the rear wheel speed detector 66 can detect the rotation speeds of the front wheel and the rear wheel, respectively.

The controller 407 includes a lean angle calculator 476 configured to calculate the lean angle of the vehicle using the difference between the rotation speed of the front wheel detected by the front wheel speed detector 65 and the rotation speed of the rear wheel detected by the rear wheel speed detector 66. Accordingly, each of the front wheel speed detector 65 and the rear wheel speed detector 66 function as a vehicle body posture detector that detects the posture of the vehicle body 2.

In the controller 407, the gear-shift control determiner 473 determines whether or not the vehicle is coasting based on the rotation speed of the front wheel detected by the front wheel speed detector 65 and the rotation speed of the rear wheel detected by the rear wheel speed detector 66.

In a manner similar to the first variation of the first embodiment, the controller 407 includes a gear-shift signal generator 74 and a memory 75. Configurations of the gear-shift signal generator 74 and the memory 75 are similar to those in the first variation of the first embodiment, and thus, will not be described in detail.

As described above, the lean angle of the vehicle can be easily obtained by calculating the lean angle.

In the second variation of the first embodiment, as shown in FIG. 9, the gear-shift control determination data is data in which the threshold of the vehicle speed for inhibiting changing of gear stages increases as the lean angle of the vehicle 1 increases. The gear-shift control determination data, however, may be any data as long as the threshold of the vehicle speed for inhibiting changing of gear stages varies with respect to the lean angle. The gear-shift control determination data may be data in which the threshold of the vehicle speed for inhibiting changing of gear stages is constant with respect to the lean angle of the vehicle.

In the embodiments described above, a driving force is transferred to the rear wheel 4 of the vehicle 1 from the engine unit 10. Alternatively, a driving force may be transferred to the front wheel of the vehicle from the engine unit. In this case, the multi-stage automatic transmission changes a driving force transferred from the engine to the front wheel.

In the embodiments described above, the vehicle 1 includes the engine 11 as a driving source. Alternatively, the driving source of the vehicle may be a motor. The driving source may be a hybrid system obtained by combining an engine and a motor.

In the embodiments described above, examples of the multi-stage automatic transmission are described. Alternatively, the multi-stage automatic transmission may be a transmission with any configuration as long as the transmission has a configuration including at least one clutch and a plurality of gear stages and capable of automatically changing the gear stages stepwise.

In the embodiments described above, the multi-stage automatic transmissions 12 and 312 are six-speed transmissions. Alternatively, the multi-stage automatic transmission may be a transmission for five speeds or less, or a transmission for seven or more speeds.

In the embodiments described above, motorcycles have been described as examples of the vehicle. The vehicle, however, may be a vehicle other than motorcycles as long as the vehicle is a leaning vehicle including a multi-stage automatic transmission. The vehicle may include a plurality of wheels including a front wheel and a rear wheel.

### REFERENCE SIGNS LIST

1 vehicle (leaning vehicle)
2 vehicle body
3 front wheel
4 rear wheel
7, 107, 207, 307 controller (gear-shift controller)
10 engine unit
11 engine (driving source)
11a crankshaft
12, 312 multi-stage automatic transmission
14 shift switch (gear-shift operator)
15 clutch actuator
16 shift actuator
20, 320 transmission mechanism
21 main shaft
22 output shaft
23 driving gear
24 driven gear
40 clutch
46 input gear
50 shift mechanism
61 lean detector (vehicle body posture detector)
62 engine speed detector
63 vehicle speed detector
65 front wheel speed detector (vehicle body posture detector)
66 rear wheel speed detector (vehicle body posture detector)
73, 173, 273 gear-shift control determiner
74 gear-shift signal generator
75 memory
76, 476 lean angle calculator
315a first clutch actuator
315b second clutch actuator
321a first main shaft
321b second main shaft
322 output shaft
323a first-speed fixing gear
323b first-speed gear
324a second-speed fixing gear
324b second-speed gear
325a first spline gear
325b third-speed gear
326a second spline gear
326b fourth-speed gear
327a fifth-speed gear
327b third spline gear
328a sixth-speed gear
328b fourth spline gear
329 sprocket
340 first clutch (clutch)
350 shift mechanism
360 second clutch (clutch)

## Claims

1. A leaning vehicle (1) that is configured to lean leftward when turning to the left and to lean rightward when turning to the right, the leaning vehicle (1) comprising:
a vehicle body (2);
a plurality of wheels (3, 4) including a front wheel (3) and a rear wheel (4);
a driving source (11) configured to supply a driving force to at least one of the front wheel (3) or the rear wheel (4);
a vehicle body posture detector (61) configured to detect a posture of the vehicle body (2);
a gear-type multi-stage automatic transmission (12, 312) including a plurality of gear stages and a clutch (40, 340, 360) being capable of switching between a transfer state and a non-transfer state of the driving force from the driving source (11) to the plurality of gear stages, the multi-stage automatic transmission (12, 312) being configured to change a driving force to be transferred from the driving source (11) to at least one of the front wheel (3) or the rear wheel (4) by automatically changing the plurality of gear stages stepwise; and
a gear-shift controller (7, 107, 207, 307) configured to control changing of the plurality of gear stages in the multi-stage automatic transmission (12, 312), the gear-shift controller (7, 107, 207, 307) being configured to switch the driving force to the non-transfer state in the multi-stage automatic transmission (12, 312) to put the leaning vehicle (1) in a coasting state if a rotation speed of the driving source (11) is smaller than a threshold, wherein
the gear-shift controller (7, 107, 207, 307) is configured to inhibit a shift-down of the plurality of gear stages in the multi-stage automatic transmission (12, 312) if the vehicle body posture detector (61) detects that the leaning vehicle (1) is turning in a lean state and the leaning vehicle (1) is coasting in the non-transfer state of the driving force in the multi-stage automatic transmission (12, 312), wherein the lean state is a state in which the leaning vehicle (1) leans leftward or rightward about a rotation axis extending in the front-rear direction of the leaning vehicle (1) as a center.

2. The leaning vehicle (1) according to claim 1, wherein
while the leaning vehicle (1) is traveling in an upright state, the gear-shift controller (7, 107, 207, 307) is configured to permit a shift-down of the plurality of gear stages in the multi-stage automatic transmission (12, 312) even if the driving force is in the non-transfer state in the multi-stage automatic transmission (12, 312).

3. The leaning vehicle (1) according to claim 1 or 2, further comprising
a gear-shift operator (14) configured to change the plurality of gear stages by an operation of a driver, wherein
the gear-shift controller (7, 107, 207, 307) is configured to change the plurality of gear stages in the multi-stage automatic transmission (12, 312) in response to an operation of the gear-shift operator (14), whereas in stopping of the leaning vehicle (1), the gear-shift controller (7, 107, 207, 307) is configured to shift down the plurality of gear stages in the multi-stage automatic transmission (12, 312) irrespective of whether or not the gear-shift operator (14) is operated.

4. The leaning vehicle (1) according to claim 3, wherein
the gear-shift controller (7, 107, 207, 307) is configured to permit a shift-down of the plurality of gear stages in response to the operation of the gear-shift operator (14) even if the leaning vehicle (1) is coasting in the non-transfer state of the driving force in the multi-stage automatic transmission (12, 312) while the leaning vehicle (1) is turning in the lean state.

5. The leaning vehicle (1) according to any one of claims 1 to 4, wherein the gear-shift controller (7, 107, 207, 307) is configured to inhibit a shift-down of the plurality of gear stages in the multi-stage automatic transmission (12, 312) if a yaw rate obtained from a detection result of the vehicle body posture detector (61) is greater than or equal to a yaw rate threshold and the leaning vehicle (1) is coasting in the non-transfer state of the driving force in the multi-stage automatic transmission (12, 312), wherein the yaw rate is a value representing a speed of change of a yaw angle in the leaning vehicle (1) when the leaning vehicle (1) turns in the lean state.

6. The leaning vehicle (1) according to claim 5, wherein
the gear-shift controller (7, 107, 207, 307) is configured to inhibit a shift-down of the plurality of gear stages in the multi-stage automatic transmission (12, 312) if the yaw rate and a lean angle obtained from a detection result of the vehicle body posture detector (61) are greater than or equal to the yaw rate threshold and a lean angle threshold, respectively, and the leaning vehicle (1) is coasting in the non-transfer state of the driving force in the multi-stage automatic transmission (12, 312), wherein the lean angle is an angle formed by a line vertical to a road surface and an up-down direction reference line of the leaning vehicle (1).

7. The leaning vehicle (1) according to any one of claims 1 to 4, further comprising
a vehicle speed detector (63) configured to detect a vehicle speed of the leaning vehicle (1), wherein
the gear-shift controller (7, 107, 207, 307) is configured to inhibit a shift-down of the plurality of gear stages in the multi-stage automatic transmission (12, 312) based on a lean angle obtained from a detection result of the vehicle body posture detector (61) and the vehicle speed detected by the vehicle speed detector (63) if the leaning vehicle (1) is coasting in the non-transfer state of the driving force in the multi-stage automatic transmission (12, 312), wherein the lean angle is an angle formed by a line vertical to a road surface and an up-down direction reference line of the leaning vehicle (1).

8. The leaning vehicle (1) according to claim 6 or 7, further comprising:
a front wheel speed detector (65) configured to detect a rotation speed of the front wheel (3); and
a rear wheel speed detector (66) configured to detect a rotation speed of the rear wheel (4), wherein
the gear-shift controller (7, 107, 207, 307) is configured to calculate the lean angle based on a difference between the rotation speed of the front wheel (3) detected by the front wheel speed detector (65) and the rotation speed of the rear wheel (4) detected by the rear wheel speed detector (66).

## Patentansprüche

1. Ein Neigungsfahrzeug, das dazu ausgebildet ist, sich beim Abbiegen nach links zu neigen und sich beim Abbiegen nach rechts zu neigen, wobei das Neigungsfahrzeug (1) folgende Merkmale aufweist:
einen Fahrzeugkörper (2);
eine Mehrzahl von Rädern (3, 4) mit einem Vorderrad (3) und einem Hinterrad (4);
eine Antriebsquelle (11), die dazu ausgebildet ist, eine Antriebskraft an zumindest eines des Vorderrads (3) oder des Hinterrads (4) zu liefern;
einen Fahrzeugkörper-Haltungsdetektor (61), der dazu ausgebildet ist, eine Haltung des Fahrzeugkörpers (2) zu erfassen;
ein Zahnradtyp-Mehrstufen-Automatikgetriebe (12, 312) mit einer Mehrzahl von Getriebestufen und einer Kupplung (40, 340, 360), die in der Lage ist, zwischen einem Übertragungszustand und einem Nichtübertragungszustand der Antriebskraft von der Antriebsquelle (11) auf die Mehrzahl von Getriebestufen zu schalten, wobei das Mehrstufen-Automatikgetriebe (12, 312) dazu ausgebildet ist, eine Antriebskraft, die von der Antriebsquelle (11) auf zumindest eines des Vorderrads (3) oder des Hinterrads (4) übertragen werden soll, durch automatisches stufenweises Ändern der Mehrzahl von Getriebestufen zu ändern; und
eine Gangschalt-Steuerung (7, 107, 207, 307), die dazu ausgebildet ist, ein Ändern der Mehrzahl von Getriebestufen in dem Mehrstufen-Automatikgetriebe (12, 312) zu steuern, wobei die Gangschalt-Steuerung (7, 107, 207, 307) dazu ausgebildet ist, die Antriebskraft in den Nichtübertragungszustand in dem Mehrstufen-Automatikgetriebe (12, 312) zu schalten, um das Neigungsfahrzeug (1) in einen Freirollzustand zu bringen, wenn eine Drehgeschwindigkeit der Antriebsquelle (11) kleiner ist als eine Schwelle, wobei
die Gangschalt-Steuerung (7, 107, 207, 307) dazu ausgebildet ist, ein Herunterschalten der Mehrzahl von Getriebestufen in dem Mehrstufen-Automatikgetriebe (12, 312) zu verhindern, wenn der Fahrzeugkörper-Haltungsdetektor (61) erfasst, dass das Neigungsfahrzeug (1) in einem Neigungszustand abbiegt und das Neigungsfahrzeug (1) in dem Nichtübertragungszustand der Antriebskraft in dem Mehrstufen-Automatikgetriebe (12, 312) frei rollt, wobei der Neigungszustand ein Zustand ist, in dem sich das Neigungsfahrzeug (1) nach links oder nach rechts um eine Rotationsachse, die sich in der Vorne-Hinten-Richtung des Neigungsfahrzeugs (1) erstreckt, als Mitte neigt.

2. Das Neigungsfahrzeug (1) gemäß Anspruch 1, bei dem,
während sich das Neigungsfahrzeug (1) in einem aufrechten Zustand bewegt, die Gangschalt-Steuerung (7, 107, 207, 307) dazu ausgebildet ist, ein Herunterschalten der Mehrzahl von Getriebestufen in dem Mehrstufen-Automatikgetriebe (12, 312) selbst dann zu erlauben, wenn die Antriebskraft sich in dem Nichtübertragungszustand in dem Mehrstufen-Automatikgetriebe (12, 312) befindet.

3. Das Neigungsfahrzeug (1) gemäß Anspruch 1 oder 2, das ferner folgendes Merkmal aufweist:
einen Gangschalt-Bediener (14), der dazu ausgebildet ist, die Mehrzahl von Getriebestufen durch eine Bedienung eines Fahrers zu ändern, wobei
die Gangschalt-Steuerung (7, 107, 207, 307) dazu ausgebildet ist, die Mehrzahl von Getriebestufen in dem Mehrstufen-Automatikgetriebe (12, 312) ansprechend auf eine Bedienung des Gangschalt-Bedieners (14) zu ändern, während beim Stoppen des Neigungsfahrzeugs (1) die Gangschalt-Steuerung (7, 107, 207, 307) dazu ausgebildet ist, die Mehrzahl von Getriebestufen in dem Mehrstufen-Automatikgetriebe (12, 312) unabhängig davon herunterzuschalten, ob der Gangschalt-Bediener (14) bedient wird oder nicht.

4. Das Neigungsfahrzeug (1) gemäß Anspruch 3, bei dem
die Gangschalt-Steuerung (7, 107, 207, 307) dazu ausgebildet ist, ein Herunterschalten der Mehrzahl von Getriebestufen ansprechend auf die Bedienung des Gangschalt-Bedieners (14) selbst dann zu erlauben, wenn das Neigungsfahrzeug (1) in dem Nichtübertragungszustand der Antriebskraft in dem Mehrstufen-Automatikgetriebe (12, 312) frei rollt, während das Neigungsfahrzeug (1) in dem Neigungszustand abbiegt.

5. Das Neigungsfahrzeug (1) gemäß einem der Ansprüche 1 bis 4, bei dem
die Gangschalt-Steuerung (7, 107, 207, 307) dazu ausgebildet ist, ein Herunterschalten der Mehrzahl von Getriebestufen in dem Mehrstufen-Automatikgetriebe (12, 312) zu verhindern, wenn eine Gierrate, die aus einem Erfassungsergebnis des Fahrzeugkörper-Haltungsdetektors (61) erhalten wird, größer oder gleich einer Gierratenschwelle ist und das Neigungsfahrzeug (1) in dem Nichtübertragungszustand der Antriebskraft in dem Mehrstufen-Automatikgetriebe (12, 312) frei rollt, wobei die Gierrate ein Wert ist, der eine Geschwindigkeitsänderung eines Gierwinkels in dem Neigungsfahrzeug (1) darstellt, wenn das Neigungsfahrzeug (1) in dem Neigungszustand abbiegt.

6. Das Neigungsfahrzeug (1) gemäß Anspruch 5, bei dem
die Gangschalt-Steuerung (7, 107, 207, 307) dazu ausgebildet ist, ein Herunterschalten der Mehrzahl von Getriebestufen in dem Mehrstufen-Automatikgetriebe (12, 312) zu verhindern, wenn die Gierrate und ein Neigungswinkel, die aus einem Erfassungsergebnis des Fahrzeugkörper-Haltungsdetektors (61) erhalten werden, größer oder gleich der Gierratenschwelle bzw. einer Neigungswinkelschwelle sind und das Neigungsfahrzeug (1) in dem Nichtübertragungszustand der Antriebskraft in dem Mehrstufen-Automatikgetriebe (12, 312) frei rollt, wobei der Neigungswinkel ein Winkel ist, der gebildet ist durch eine Linie vertikal zu einer Straßenoberfläche und eine Auf-Ab-Richtungs-Referenzlinie des Neigungsfahrzeugs (1).

7. Das Neigungsfahrzeug (1) gemäß einem der Ansprüche 1 bis 4, das ferner folgendes Merkmal aufweist:
einen Fahrzeuggeschwindigkeitsdetektor (63), der dazu ausgebildet ist, eine Fahrzeuggeschwindigkeit des Neigungsfahrzeugs (1) zu erfassen, wobei
die Gangschalt-Steuerung (7, 107, 207, 307) dazu ausgebildet ist, ein Herunterschalten der Mehrzahl von Getriebestufen in dem Mehrstufen-Automatikgetriebe (12, 312) basierend auf einem Neigungswinkel, der aus einem Erfassungsergebnis des Fahrzeugkörper-Haltungsdetektors (61) erhalten wird, und der Fahrzeuggeschwindigkeit, die durch den Fahrzeuggeschwindigkeitsdetektor (63) erfasst wird, zu verhindern, wenn das Neigungsfahrzeug (1) in dem Nichtübertragungszustand der Antriebskraft in dem Mehrstufen-Automatikgetriebe (12, 312) frei rollt, wobei der Neigungswinkel ein Winkel ist, der gebildet ist durch eine Linie vertikal zu einer Straßenoberfläche und eine Auf-Ab-Richtungs-Referenzlinie des Neigungsfahrzeugs (1).

8. Das Neigungsfahrzeug (1) gemäß Anspruch 6 oder 7, das ferner folgende Merkmale aufweist:
einen Vorderrad-Geschwindigkeitsdetektor (65), der dazu ausgebildet ist, eine Drehgeschwindigkeit des Vorderrads (3) zu erfassen; und
einen Hinterrad-Geschwindigkeitsdetektor (66), der dazu ausgebildet ist, eine Drehgeschwindigkeit des Hinterrads (4) zu erfassen, wobei
die Gangschalt-Steuerung (7, 107, 207, 307) dazu ausgebildet ist, den Neigungswinkel basierend auf einer Differenz zwischen der Drehgeschwindigkeit des Vorderrads (3), die durch den Vorderrad-Geschwindigkeitsdetektor (65) erfasst wird, und der Drehgeschwindigkeit des Hinterrads (4) zu berechnen, die durch den Hinterrad-Geschwindigkeitsdetektor (66) erfasst wird.

## Revendications

1. Véhicule à inclinaison (1) configuré pour s'incliner vers la gauche lors d'un virage à gauche et pour s'incliner vers la droite lors d'un virage à droite, le véhicule à inclinaison (1) comprenant:
une carrosserie de véhicule (2);
une pluralité de roues (3, 4) comportant une roue avant (3) et une roue arrière (4);
une source d'entraînement (11) configurée pour alimenter une force d'entraînement vers au moins l'une parmi la roue avant (3) ou la roue arrière (4);
un détecteur de posture de carrosserie de véhicule (61) configuré pour détecter une posture de la carrosserie de véhicule (2);
une transmission automatique à plusieurs étages de type engrenage (12, 312) comportant une pluralité d'étages d'engrenage et un embrayage (40, 340, 360) qui est à même de commuter entre un état de transfert et un état de non-transfert de la force d'entraînement de la source d'entraînement (11) à la pluralité d'étages d'engrenage, la transmission automatique à plusieurs étages (12, 312) étant configurée pour changer une force d'entraînement à transférer de la source d'entraînement (11) à au moins l'une parmi la roues avant (3) ou la roue arrière (4) en changeant automatiquement et pas à pas la pluralité d'étages d'engrenage; et
un moyen de commande de changement de vitesse (7, 107, 207, 307) configuré pour commander le changement de la pluralité d'étages d'engrenage dans la transmission automatique à plusieurs étages (12, 312), le moyen de commande de changement de vitesse (7, 107, 207, 307) étant configuré pour commuter la force d'entraînement à l'état de non-transfert dans la transmission automatique à plusieurs étages (12, 312) pour amener le véhicule à inclinaison (1) à un état de roue libre si une vitesse de rotation de la source d'entraînement (11) est inférieure à un seuil, dans lequel
le moyen de commande de changement de vitesse (7, 107, 207, 307) est configuré pour empêcher une commutation vers le bas de la pluralité d'étages d'engrenage dans la transmission automatique à plusieurs étages (12, 312) si le détecteur de posture de châssis de véhicule (61) détecte que le véhicule à inclinaison (1) vire dans un état incliné et que le véhicule à inclinaison (1) circule à roue libre dans l'état de non-transfert de la force d'entraînement dans la transmission automatique à plusieurs étages (12, 312), où l'état incliné est un état dans lequel le véhicule à inclinaison (1) s'incline vers la gauche ou vers la droite autour d'un axe de rotation s'étendant dans la direction avant-arrière du véhicule à inclinaison (1) comme centre.

2. Véhicule à inclinaison (1) selon la revendication 1, dans lequel
tandis que le véhicule à inclinaison (1) se déplace dans un état vertical, le moyen de commande de changement de vitesse (7, 107, 207, 307) est configuré pour permettre une commutation vers le bas de la pluralité d'étages d'engrenage dans la transmission automatique à plusieurs étages (12, 312), même si la force d'entraînement est à l'état de non-transfert dans la transmission automatique à plusieurs étages (12, 312).

3. Véhicule à inclinaison (1) selon la revendication 1 ou 2, comprenant par ailleurs
un actionneur de changement de vitesse (14) configuré pour changer la pluralité d'étages d'engrenage par une opération d'un conducteur, dans lequel
le moyen de commande de changement de vitesse (7, 107, 207, 307) est configuré pour changer la pluralité d'étages d'engrenage dans la transmission automatique à plusieurs étages (12, 312) en réaction à un actionnement de l'actionneur de changement de vitesse (14), tandis que, lors de l'arrêt du véhicule à inclinaison (1), le moyen de commande de changement de vitesse (7, 107, 207, 307) est configuré pour commuter vers le bas la pluralité d'étages d'engrenage dans la transmission automatique à plusieurs étages (12, 312) indépendamment du fait que l'actionneur de changement de vitesse (14) est actionné ou non.

4. Véhicule à inclinaison (1) selon la revendication 3, dans lequel
le moyen de commande de changement de vitesse (7, 107, 207, 307) est configuré pour permettre une commutation vers le bas de la pluralité d'étages d'engrenage en réaction à l'actionnement de l'actionneur de changement de vitesse (14), même si le véhicule à inclinaison (1) circule à roue libre dans l'état de non-transfert de la force d'entraînement dans la transmission automatique à plusieurs étages (12, 312) tandis que le véhicule à inclinaison (1) vire à l'état incliné.

5. Véhicule à inclinaison (1) selon l'une quelconque des revendications 1 à 4, dans lequel
le moyen de commande de changement de vitesse (7, 107, 207, 307) est configuré pour inhiber une commutation vers le bas de la pluralité d'étages d'engrenage dans la transmission automatique à plusieurs étages (12, 312) si un taux de lacet obtenu à partir d'un résultat de détection du détecteur de posture de carrosserie de véhicule (61) est supérieur ou égal à un seuil de taux de lacet et que le véhicule à inclinaison (1) circule à roue libre dans l'état de non-transfert de la force d'entraînement dans la transmission automatique à plusieurs étages (12, 312), où le taux de lacet est une valeur représentant une vitesse de changement d'un angle de lacet dans le véhicule à inclinaison (1) lorsque le véhicule à inclinaison (1) vire à l'état incliné.

6. Véhicule à inclinaison (1) selon la revendication 5, dans lequel
le moyen de commande de changement de vitesse (7, 107, 207, 307) est configuré pour inhiber une commutation vers le bas de la pluralité d'étages de vitesse dans la transmission automatique à plusieurs étages (12, 312) si le taux de lacet et un angle d'inclinaison obtenus à partir d'un résultat de détection du détecteur de posture de carrosserie de véhicule (61) est supérieur ou égal respectivement au seuil de taux de lacet et à un seuil d'angle d'inclinaison et que le véhicule à inclinaison (1) circule à roue libre dans l'état de non-transfert de la force d'entraînement dans la transmission automatique à plusieurs étages (12, 312), où l'angle d'inclinaison est un angle formé par une ligne verticale par rapport à une surface de route et une ligne de référence de direction de haut en bas du véhicule à inclinaison (1).

7. Véhicule à inclinaison (1) selon l'une quelconque des revendications 1 à 4, comprenant par ailleurs
un détecteur de vitesse de véhicule (63) configuré pour détecter une vitesse de véhicule du véhicule à inclinaison (1), dans lequel
le moyen de commande de changement de vitesse (7, 107, 207, 307) est configuré pour inhiber une commutation vers le bas de la pluralité d'étages d'engrenage dans la transmission automatique à plusieurs étages (12, 312) sur base d'un angle d'inclinaison obtenu à partir d'un résultat de détection du détecteur de posture de carrosserie de véhicule (61) et de la vitesse de véhicule détectée par le détecteur de vitesse de véhicule (63) si le véhicule à inclinaison (1) circule à roue libre dans l'état de non-transfert de la force d'entraînement dans la transmission automatique à plusieurs étages (12, 312), où l'angle d'inclinaison est un angle formé par une ligne verticale par rapport à une surface de route et une ligne de référence de direction de haut en bas du véhicule à inclinaison (1).

8. Véhicule à inclinaison (1) selon la revendication 6 ou 7, comprenant par ailleurs:
un détecteur de vitesse de roue avant (65) configuré pour détecter une vitesse de rotation de la roue avant (3); et
un détecteur de vitesse de roue arrière (66) configuré pour détecter une vitesse de rotation de la roue arrière (4), dans lequel
le moyen de commande de changement de vitesse (7, 107, 207, 307) est configuré pour calculer l'angle d'inclinaison sur base d'une différence entre la vitesse de rotation de la roue avant (3) détectée par le détecteur de vitesse de roue avant (65) et la vitesse de rotation de la roue arrière (4) détectée par le détecteur de vitesse de roue arrière (66).
